# EUROPÄISCHE PATENTANMELDUNG

(11) **EP 4 553 863 A1**
(43) Veröffentlichungstag der Anmeldung: **14.05.2025**
(21) Anmeldenummer: 24222588.6
(22) Anmeldetag: 04.03.2022
(51) Int. Cl.: H01B 13/012, H01R 43/28, B65G 47/51

(54) **KABELBEARBEITUNG MIT ZU- UND ABFUHR**

(30) Priorität: 17.03.2021 WO PCT/IB2021/052219; 19.07.2021 CH 0700782021
(62) Teilanmeldung aus: 22708238.5
(71) Anmelder: Schleuniger AG, 3608 Thun (CH)
(72) Erfinder: ZBINDEN, Michael, 3645 Gwatt (Thun) (CH); BLICKENSTORFER, Willi, 8143 Stallikon (CH); VON NIEDERHÄUSERN, Andreas, 3645 Gwatt (CH); FISCHER, Wolfgang, 8603 Schwerzenbach (CH); ZBINDEN, Thomas, 3088 Rüeggisberg (CH); BERGER, Simon, 3506 Grosshöchstetten (CH)
(74) Vertreter: PPR AG

(57) **Zusammenfassung**

Die Erfindung betrifft ein Kabelbearbeitungssystem umfassend eine Kabelbearbeitungsmaschine, speziell zur automatischen Bearbeitung von Kabelenden schwerer, relativ biegesteifer Kabel, vorzugsweise aber auch von leichten, dünnen Kabel, sowie langen oder kurzen Kabeln, vorzugsweise in derselben Kabelbearbeitungsmaschine. Diese hat eine Eingangsseite für die Aufnahme der Kabel, mehrere Kabelbearbeitungsstationen, eine Kabeltransportvorrichtung zum Transport wenigstens eines Kabels mit zumindest einem verfahrbaren Greifer, und eine Ausgangsseite für die Abgabe eines bearbeiteten Kabels. Erfindungsgemäss ist die Kabeltransportvorrichtung mit einer als Mehrfachspeicher ausgebildeten Kabelfördervorrichtung ausgerüstet, welche mehrere Kabelhalterungen aufweist, und wobei der Mehrfachspeicher als ein autonomer oder geführter Transporter ausgebildet ist. Zumindest einer der Greifer ist als Übergabegreifer ausgebildet um eines der Kabel nach dem anderen aus der jeweiligen Kabelhalterung zu entnehmen und an zumindest eine der Kabelbearbeitungsstationen und/oder an zumindest einen weiteren Greifer als Transfergreifer zuzuführen, welcher weitere Greifer mit einem rahmengestützten Transfermechanismus derart bewegbar ausgebildet ist, um eine Übergabe des Kabels in eine der Kabelbearbeitungsstation durchzuführen.

## Beschreibung

Die Erfindung betrifft ein Kabelbearbeitungssystem nach dem Oberbegriff des Anspruchs 1, welches eine Kabelbearbeitungsmaschine mit einer Maschinensteuerung zur automatischen Bearbeitung von Kabelenden schwerer, relativ biegesteifer Kabel auf einem Rahmen umfasst. Ebenso ein zugehöriges Verfahren zur automatischen Bearbeitung von Kabelenden schwerer, biegesteifer Kabel nach Anspruch 21 bzw. ein Zuführsystem für solche Kabel nach Anspruch 42. Speziell handelt es sich um ein Kabelbearbeitungssystem, in welchem vorabgelänget Kabelstücke oder Kabelfabrikate einer definierten Länge bearbeitet werden, vorzugsweise an einem oder zwei Kabelenden, also kein System, welches lediglich von der Rolle -also quasi endlos - arbeitet, sondern ein Kabelbearbeitungssystem zur Bearbeitung von vorabgelängen Kabeln bzw. Kabelstücken, welche in Form von Stückgut beschickt werden.

Bei Kabelbearbeitungsmaschinen erfolgt die Zuführung der Kabel zur Maschine oder zu einer oder mehreren Kabelbearbeitungsstationen oft händisch. Diese trifft besonders zu, wenn Kabelenden von schweren, relativ biegesteifen Kabeln bearbeitet werden müssen, die sich oft undefiniert und widerspenstig verhalten, wenn sie bewegt, gebogen oder gedreht werden sollen. Speziell steife oder starre, unbiegsame oder inflexibel Kabel, welche sich nur unter Kraftaufwand und grossteils elastisch federnd verbiegen oder verdrehen lassen. Beispielsweise Kabel mit Querschnitten von 2.5mm² bis 150mm², Koaxialkabel oder Kabel mit Gesamtdurchmesser >1cm, Mehrleiter-Kabel 2.5mm² bis 6mm², minimalem Biegeradius gleich oder grösser 17 bis 270mm, mit Schirmung, mit einem dicken Innenleiter oder mit einer Vielzahl von Einzelleitern, und/oder mit speziell resistenten Ummantelungen, beispielsweise für Leistungskabel in Kraftfahrzeugen, etc. Menschliche Arbeiter können meist intuitiv oder aus Erfahrung mit derartigen Kabeln umgehen, wohingegen automatisierte oder Robotersysteme bei derartigen Aufgaben zumindest sporadisch immer wieder scheitern, was zum Stillstand der Maschine oder zu Fehlteilen führen kann. Ein solches händisches zu und/oder abführen ist nicht nur mühsam und kostenintensiv, sondern auch fehleranfällig, da bei schneller, ungenauer oder schlampiger manueller Zufuhr, die Maschine die Kabel nicht mit Präzision und Reproduzierbarkeit bearbeiten kann. Auch erfordert dies eine dauerhafte Präsenz zumindest eines Arbeiters an einer der Maschinen, während diese in Betrieb ist.

Für kurze und dünne Kabel zeigt die US 5 125 154 oder US 5 152 395 eine Maschine, bei welcher sich eine ganze Schachtel mit darin jeweils einzeln auf Transporteinheiten aufgehängten Kabeln während der Bearbeitung durch eine Maschine bewegt. Auch DE 10 201 611 645 arbeitet mit speziellen Kabelboxen für jeweils eines der Kabel, welche als solche zugeführt werden.

In EP 2 565 992 werden frei herabhängende Kabelenden um einen Rundtakttisch geführt.

Bei Kabelbearbeitungsmaschinen erfolgt die Zuführung der Kabel zur Maschine oder zu einer oder mehreren Kabelbearbeitungsstationen oft händisch. Diess trifft besonders zu, wenn Kabelenden von schweren, relativ biegesteifen Kabeln bearbeitet werden müssen, die sich oft undefiniert und widerspenstig verhalten, wenn sie bewegt, gebogen oder gedreht werden sollen. Speziell davon betroffen sind steife oder starre, unbiegsame oder inflexibel Kabel, welche sich nur unter Kraftaufwand und grossteils elastisch federnd verbiegen oder verdrehen lassen. Beispielsweise Kabel mit Querschnitten von 2.5mm² bis 150mm², Koaxialkabel oder Kabel mit Gesamtdurchmesser >1cm, Mehrleiter-Kabel 2.5mm² bis 6mm², minimalem Biegeradius gleich oder grösser 17 bis 270mm, mit Schirmung, mit einem dicken Innenleiter oder mit einer Vielzahl von Einzelleitern, und/oder mit speziell resistenten Ummantelungen, beispielsweise für Leistungskabel in Kraftfahrzeugen, etc. Menschliche Arbeiter können meist intuitiv oder aus Erfahrung mit derartigen Kabeln umgehen, wohingegen automatisierte oder Robotersysteme bei derartigen Aufgaben zumindest sporadisch immer wieder scheitern, was zum Stillstand der Maschine oder zu Fehlteilen führen kann. Ein solches händisches zu und/oder abführen ist nicht nur mühsam und kostenintensiv, sondern auch fehleranfällig, da bei schneller, ungenauer oder schlampiger manueller Zufuhr, die Maschine die Kabel nicht mit Präzision und Reproduzierbarkeit bearbeiten kann. Auch erfordert dies eine dauerhafte Präsenz zumindest eines Arbeiters an einer der Maschinen, während diese in Betrieb ist.

Abgesehen davon, dass derartiges bei schweren, dicken und biegesteifen Kabeln nicht gangbar wäre, sind derartige Kabelbearbeitungssystem in Bezug auf Effizienz, Genauigkeit und Zuverlässigkeit bei der Kabelendbearbeitung verbesserungswürdig. Nachteilig an diesen bekannten Lösungen ist beispielsweise auch, dass speziell derartige rigide oder steife Kabel sich nicht in gleicher Weise wie übliche Standardkabel handhaben lassen.

Eine Aufgabe der vorliegenden Erfindung ist es somit, ein Kabelbearbeitungssystem bereitzustellen, welches die vorgenannten Nachteile nicht aufweist und insbesondere eine schnelle und zuverlässige Kabelbearbeitung bereitstellt, welche vorzugsweise auch nicht von einer dauerhaften Anwesenheit und dem Geschick eines Arbeiters abhängt. Auch sollte die Abläufe der Kabelbearbeitung besser in eine übergeordnetes, automatisiertes, elektronisches Produktions- oder Fabrikmanagement-System integrierbar sein, also z.B. auf Industrie 4.0 ausgerichtet sein.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung wird ein Kabelbearbeitungssystem bereitgestellt. Dieses System umfasst eine Kabelbearbeitungsmaschine mit einer Maschinensteuerung zur automatischen Bearbeitung von Kabelenden schwerer, relativ biegesteifer, vor-abgelängter Kabel auf einem Rahmen. Das erfindungsgemässe System ist dabei speziell ausgebildet, um mit Kabeln in Form von vor-abgelängten Kabelstücken beschickt zu werden, an denen zumindest ein, vorzugsweise beide Kabelenden bearbeitet werden. Die Kabel können dabei speziell als im wesentlichen gerade Stücke einer definierten Kabellänge vorliegen, bzw. bei längeren Kabeln auch als Kabel-Wickel, mit vordefinierter Kabellänge, welche Wickel mittransportiert werden und deren Enden zumindest annähernd gerade gehalten werden. Mit Kabelende ist dabei nicht lediglich das stumpfe Ende einer Schnittfläche des Kabels gemeint, sondern ein Kabelendbereich, also z.B. ein Bereich an Ende des Kabels, insbesondere von z.B. 5cm oder 10cm oder bis etwa 30cm.

Die Maschine weist dabei eine Eingangsseite für eine Aufnahme der zu bearbeitenden Kabel, sowie einer Ausgangsseite für eine Abgabe der bearbeiteten Kabel auf. Zwischen der Eingangsseite und der Ausgangsseite erfolgt eine Bearbeitung des Kabels, vorzugsweise - aber nicht zwingend - eine Bearbeitung der Kabelenden, z.B. mit einem Abisolieren, Verdrillen, Biegen, Krimpen, Montieren, Konfektionieren, etc. was mit mindestens einer, vorzugsweise mit wenigstens zwei oder mehr rahmengestützten Kabelbearbeitungsstationen erfolgt. Die Kabelbearbeitungsmaschine ist dabei auf einem Rahmen ausgeführt, was bedeutet, dass die Kabelbearbeitungsstationen als Einheit in einer Maschine zusammengefasst sind, und nicht etwa einzeln und verstreut in einer Fabrikhalle stehen. Beispielsweise können die Kabelbearbeitungsstationen unter sich und/oder mittels einer Rahmenkonstruktion zu einer Maschine verbunden sein und vorzugsweise etwa auch unter einer gemeinsamen Einhausung zusammengefasst sein.

Das erfindungsgemässe Kabelbearbeitungssystem weist dabei auch eine Kabeltransportvorrichtung zum Transport wenigstens eines Kabels auf. Diese Kabeltransportvorrichtung weist in der Kabelbearbeitungsmaschine zumindest einen ebenfalls rahmengestützten, verfahrbaren Greifer für das Kabel auf. Ein solcher Greifer ist zum einen mit einem als Greifsystem ausgebildeten Teilbereich zum lösbaren festhalten eines Kabels oder Kabelendes ausbildet, beispielsweise mit einer Art Zangengreifer mit bewegbaren Backen oder einer anderen Einrichtung zur lösbaren form- und/oder kraftschlüssigen Klemmung eines Kabels, einem Vakuumhalter oder einer adhäsiven, magnetischen oder gravitationsbedingen, lösbaren Halteeinrichtung - mit oder ohne einer entsprechenden Sensorik zur Feststellung ob und/oder wie aktuell ein Kabel gehalten wird. Der Greifer ist dabei verfahrbar ausgestaltet, was bedeutet, dass dieser ausgebildet ist das Kabel in Bezug auf eine Maschinenbasis, also beispielsweise den Rahmen, die Kabelbearbeitungsstationen und/oder die Eingangs- oder Ausgangsseite zu bewegen. Das Transportsystem und/oder der verfahrbare Greifer weist also zumindest eine rotative oder lineare Bewegungsachse auf.

Erfindungsgemäss ist die Kabeltransportvorrichtung mit einer als Mehrfachspeicher ausgebildeten Kabelfördervorrichtung ausgerüstet, welche mehrere Kabelhalterungen für jeweils eines der Kabel oder zumindest eines Kabelendes des Kabels aufweist. Diese ist speziell als aktiv fördernde Kabelfördervorrichtung ausgebildet, um mehrere der Kabel aktiv zu fördern, also die Kabel jeweils mit einem aktiven Mechanismus zu bewegen, um die im Mehrfachspeicher enthaltenen Kabel innerhalb des Mehrfachspeichers und in Bezug zu diesem weiterzubewegen. Etwa eine Kabelfördervorrichtung in Form eines Förderbands, einem Walking-Beam-Förderer, eines Kettenförderers für vorzugsweise trennbare Ketten mit Schnellverschluss in den Segmenten, etc. - speziell wie infolge detaillierter beschrieben und/oder skizziert.

Die Kabelhalterungen können dabei beispielsweise als Klemme, Auflage, Fach oder Trennsteg(-paar) für eines der Kabel bzw. eines der Kabelenden ausgebildet sein, welche mit der Kabelfördervorrichtung im Mehrfachspeicher bewegt werden, speziell wie im Weiteren beispielhaft beschrieben. Bevorzugt werden für ein Kabel zwei zueinander beanstandete Kabelhalterungen verwendet, vorzugsweise mit der einen davon ausgeführt als Klemme und der anderen als Auflage. Eine Klemme ist dabei beispielsweise ein Element, welche das Kabel an einem Teilbereich seines Umfangs zwischen zwei elastischen, im Wesentlichen parallelen und das Kabel teilweise umschliessenden Teilen mit einer Kraftwirkung festklemmt. Eine Auflage kann beispielsweise als eine vertiefte Form ausgebildet sein, in welcher das Kabel durch Schwerkraft zu liegen kommt, und vorzugsweise durch seitliche Trennstege das Kabel lateral in einem definierten Positionsbereich halten, ohne dabei das Kabel mit einer Kraftwirkung zwischen den Trennstegen zu klemmen.

Erfindungsgemäss ist zumindest einer der Greifer als Übergabegreifer ausgebildet. Dieser ist speziell ausgebildet, um eines der Kabel nach dem anderen aus der jeweiligen Kabelhalterung zu entnehmen und an einen weiteren Greifer als Transfergreifer und/oder an eine der Kabelbearbeitungsstationen weiterzugeben. Ein solcher Transfergreifer und/oder Transfer/Übergabegreifer ist mit einem rahmengestützten Transfermechanismus derart bewegbar ausgebildet, um eine Übergabe des Kabels von einer der Kabelbearbeitungsstation in eine andere der Kabelbearbeitungsstationen durchzuführen. Auch der zumindest eine Übergabegreifer wird durch einen Transfermechanismus bewegt.

Bevorzugt weist der Übergabegreifer zwei Greiferbackenpaare zum Greifen eines ersten und eines zweiten Leiters des Kabels auf. Damit ist ein Kabel, mit mehr als einem Leiter, stabil aufnehmbar und transprotierbar.

Insbesondere sind die Greiferbackenpaare an einer Greifertransferführung angeordnet und entlang der Greifertransferführung bewegbar, sodass deren Abstand zueinander einstellbar ist. Der Abstand zwischen den Greiferbackenpaaren kann, je nach Kabeltyp und Abstand der beiden Leiter des Kabels individuell und reproduzierbar eingestellt werden.

Insbesondere weist der Transfergreifer zwei Greiferbackenpaare zum Greifen der Leiter auf. Der Übergabegreifer kann das aus der Kabellagerung entnommene Kabel einfach an den Transfergreifer übergeben, welcher dieses für die Bearbeitung zumindest einer, vorzugswiese zumindest zwei oder mehr Kabelbearbeitungsstationen, zuführt. Dabei ändern die Greiferbackenpaar des Übergabegreifers vor oder während der Übergabe deren Abstand zueinander, sodass die Leiter in die Greiferbackenpaare des Transfergreifers passen und anschliessend einzeln den Kabelbearbeitungsstationen einfach zuführbar sind.

Die Kabelfördervorrichtung ist vorzugsweise mittels Andockmechanismus an der Eingangsseite der Kabelbearbeitungsmaschine in einer definierten Positionsrelation andockbar, speziell zumindest während des Betriebs der Kabelbearbeitungsmaschine. Je nach Ausführungsform kann die Kabelfördervorrichtung im Wesentlichen nur temporär (z.B. als Wagen o.ä.) oder auch im Wesentlichen dauerhaft (z.B. fixmontiert) an der Eingangsseite der Kabelbearbeitungsmaschine angebracht sein.

Bevorzugt weist der Andockmechanismus eine mechanische Führung zum positionierten Andocken des Mehrfachspeichers an die Kabelbearbeitungsmaschine auf. Beispielsweise mit einer mechanischen, magnetischen oder elektronischen Einlaufvorrichtung für eine solchen Transporter, mit welchem dieser vorzugsweise definiert gegenüber der Kabelbearbeitungsmaschine positionierbar ist. Dabei kann beispielsweise auch ein Sensor zur Bestimmung eines Andockens und/oder einer Andockposition, eine Verriegelungsvorrichtung zum Ver- und Entriegeln der Andockung, einem Einlaufdämpfer für den Transporter, etc. bereitgestellt werden. Mit diesen ist z.B. ein sicheres und definiertes Andocken des Transporters an der Kabelbearbeitungsmaschine erzielbar.

Vorzugsweise ist dabei die Kabelfördervorrichtung auf einem boden- oder deckengestützen Transporter abgestützt, welcher unabhängig von der Kabelbearbeitungsmaschine bewegbar ist. Beispielsweise kann ein solcher Transporter als ein rädergebundenes Transportsystem - wie etwa einem Wagen oder Trolley oder dergleichen - ausgebildet sein, entweder frei verfahrbar oder schienengebunden. Ein anderes Beispiel wäre etwa ein decken- oder wandgebundenes Transportsystem ausgebildet sein - wie etwa einer Gondel oder ähnlichem.

Vorzugsweise ist zwischen dem Mehrfachspeicher und die Kabelbearbeitungsmaschine eine lösbare Kupplung ausgebildet. Eine solche kann insbesondere im Bereich des Andockmechanismus ausgebildet sein. Diese lösbare Kupplung ist dabei speziell derart ausgestaltet, um beim Andocken einen Antrieb der Kabelbearbeitungsmaschine mit der Kabelfördervorrichtung in eine mechanische Wirkverbindung zu bringen. Dies kann beispielsweise mit mittels Zahnräder erfolgen, welche in gekuppeltem Zustand interagieren. In einer bevorzugten Ausführung kann etwa eines dieser Zahnräder in einem Zwischenradhalter drehbar gelagert sein, welcher Zwischenradhalter vorzugsweise drehbar um ein anderes Zahnrad gelagert ist und diese drehbare Lagerung mit einem passiven Kraftelement vorgespannt ist. Dabei können alle Zahnräder vorzugsweise durch eine Verschalung von der Umgebung getrennt sein. Diese Verschalung weist eine Öffnung auf, die während dem Transport des Mehrfachspeichers durch ein Verschlusselement geschlossen ist, welches Verschlusselement einen Mechanismus aufweist, welcher diese Öffnung beim Andocken freigibt um das für das Kuppeln notwendige Zahnrad zugänglich zu machen. Das Verschlusselement kann dabei z.B. eine Klappe, ein Schieber oder ähnliches sein.

Alternativ zur lösbaren Kupplung weist die Kabelfördervorrichtung einen lokalen Antrieb auf. Dieser kann mit einer vorzugsweise lokalen Steuerung verbunden sein, welcher im Betriebszustand mit der Maschinensteuerung interagiert.

Vorzugsweise weist der Mehrfachspeicher in angedocktem Zustand einen Entnahmebereich und/oder einen Einlegebereich für die Kabel auf, welche Bereiche durch eine Einhausung der Kabelbearbeitungsmaschine von den Greifern und/oder voneinander getrennt sind und vorzugsweise manuell bedienbar sind.

In einer Ausführungsform kann der Mehrfachspeicher während des Betriebs der Kabelbearbeitungsmaschine kontinuierlich an dieser angedockt sein und die Bereiche ausserhalb der Einhausung während des Betriebs kontinuierlich oder zyklisch mit den Kabeln be- oder entladen werden. Dabei kann optional auch auf einen im Betrieb lösbaren Andockmechanismus gänzlich verzichtet werden und der Mehrfachspeicher also ein fester Teil oder ein fixmontiertes Modul der Kabelbearbeitungsmaschine sein. Somit kann kontinuierlicher Betrieb der Maschine erzielt werden. Dabei können insbesondere mit zyklischen be- oder entladen mehrere erfindungsgemässe Kabelbearbeitungssysteme parallel betrieben werden, z.B. mit einem wechselweisen Bedienen ihrer Entnahmebereiche und/oder Einlegebereiche. Optional kann dabei eine automatische Überwachung eines Füllstands erfolgen, beispielsweise mit einer Warnung bei geringem Füllstand des Einlegebereichs bzw. fast vollem Entnahmebereich.

In einer anderen Ausführungsform kann der Mehrfachspeicher nach dem Andocken auch im Wesentlichen vollständig innerhalb einer Einhausung der Kabelbearbeitungsmaschine untergebracht sein. Ein be- bzw. entladen des Mehrfachspeichers kann dann z.B. mit einem Abdocken des Mehrfachspeichers erfolgen, woraufhin derselbe oder ein anderer beladener Mehrfachspeicher wieder angedockt wird.

Bevorzugterweise weist jede der Kabelhalterungen zumindest einen Steg bzw. Mitnehmer, eine Auflage und/oder eine Klemme auf. Dabei können vorzugsweise jeweils eine Klemme und eine Auflage parallel auf einem gemeinsamen oder auf zwei synchron zueinander laufenden Riemen und/oder Ketten angeordnet sein. Die Klemmen können elastische Elemente aufweisen, deren Vorspannung vorzugsweise eingestellt werden kann. Die Klemmen können und in Aufnahmen befestigt sein, welche durch Führungen entlang der Förderrichtung der Riemen und/oder Ketten geführt werden.

Vorzugsweise ist bei Bedarf für einen Transport von Kabelwickeln zusätzlich eine Hänge- bzw. Wickel-Transporteinrichtung vorgesehen. In einer solchen kann jeder Kabelwickel in jeweils einer dafür vorgesehenen Hänge- bzw. Wickel-Transporteinheit bewegbar sein, vorzugsweise synchron mit der Bewegung der jeweils zugehörigen Kabelenden mithilfe der Greifer. Vorzugsweise ist die Kabelbearbeitungsmaschine derart ausgebildet, dass mit derselben Maschine sowohl dünne Kabel, Standard-Kabel und dicke, biegesteife Kabel bearbeitbar sind, insbesondere ohne wesentliche Umbauten an der Maschine vornehmen zu müssen. In einer bevorzugten Ausführungsform können dabei auch mit derselben Maschine sowohl kurze Kabelstücke von z.B. etlichen 10cm, als auch lange Kabel von mehreren Metern bearbeitet werden, speziell indem für die längeren Kabel neben dem Mehrfachspeicher für die Kabelenden zusätzlich eine Hängetransporteinrichtung der Kabelbearbeitungsmaschine genutzt wird. Beispielsweise kann ein erfindungsgemässer Mehrfachspeicher auch derart ausgebildet sein, dass mit diesem auch biegeschlaffe Kabel bereitstell- bzw. förderbar sind.

Bevorzugterweise ist der Transporter - alternativ zu einer Ausführungsform mit einem durch Muskelkraft bewegten Transporters - mit einer Antriebseinrichtung zur Bewegung des Transporters ausgebildet. Beispielsweise kann der Transporter als ein autonomes oder geführtes Fahrzeug mit eigener Fahr-Steuerung für eine zumindest teilweise autonome Navigation ausgerüstet sein. Dabei kann die Fahr-Steuerung des Transporters zur Kommunikation mit der Maschinen-Steuerung und/oder mit einem übergeordneten Leitsystem ausgebildet sein. Optional kann der Transporter auch ausgebildet sein, um mit einem autonomen Transportsystem einer Fabrik gekoppelt und in kontrollierter Weise bewegt zu werden.

Vorzugsweise ist in eine Ausführungsform an der Eingangsseite über zumindest einem Teilbereich der Kabelfördervorrichtung zumindest ein Magazin angeordnet, welches mit einer betätigbaren Unterseite derart ausgebildet ist, dass mithilfe einer Betätigungseinrichtung im Magazin befindliche Kabel nach unten in die Kabelfördervorrichtung und/oder ein weiteres Magazin freigebbar sind, beispielsweise mit Klappen, Schiebern oder ähnlichem an der Unterseite. Dabei kann das Magazin oder eine Gruppe aus mehreren Magazinen vorzugsweise mithilfe eines Transporters bewegt und/oder vorzugsweise mithilfe eines Andockmechanismus an der Kabelbearbeitungsmaschine andockbar sein.

Bevorzugterweise ist an der Ausgangsseite zumindest ein Magazin zur Aufnahme von bearbeiteten Kabeln mit einer betätigbarer Unterseite angeordnet, welche Unterseite derart ausgebildet ist, dass mithilfe einer Betätigungseinrichtung im Magazin befindliche Kabel nach unten freigebbar sind, z.B. ähnlich wie zuvor beschreiben. Insbesondere kann das Magazin mit einer betätigbaren Unterseite derart ausgebildet sein, dass mithilfe einer Betätigungseinrichtung im Magazin befindliche Kabel nach unten in die Kabelfördervorrichtung ein weiteres Magazin und/oder einer Transport- oder Lagerbox freigebbar sind. Auch hier kann das Magazin oder eine Gruppe aus mehreren Magazinen vorzugsweise mithilfe eines Transporters bewegt und/oder vorzugsweise mithilfe eines Andockmechanismus an der Kabelbearbeitungsmaschine andockbar sein.

Vorzugsweise ist die Kabeltransportvorrichtung an der Ausgangsseite mit einer weiteren als Mehrfachspeicher ausgebildeten weiteren Kabelfördervorrichtung ausgebildet, welches mehrere weitere Kabelhalterungen aufweist. Diese Kabelfördervorrichtung kann ebenfalls mittels Andockmechanismus an der Ausgangsseite in einer definierten Positionsrelation andockbar sein. Dabei ist ein zweiter verfahrbarer Greifer der Kabeltransportvorrichtung ausgebildet eines der Kabel nach dem anderen aus einer der Kabelbearbeitungsstationen zu entnehmen und der jeweiligen weiteren Kabelhalterung zuzuführen. Vorzugsweise können die Mehrfachspeicher für Eingangsseite und/oder Ausgangsseite gleich oder zumindest gleichartig ausgebildet und austauschbar sein.

Bevorzugterweise ist an der Ausgangsseite zumindest ein Fehlteilmagazin angeordnet, welches vorgesehenen ist, um in diesem von der Kabelbearbeitungsmaschine als Fehlteile erkannte, vorzugsweise als "fehlerhaft" markierte Kabel, abzulegen. Dabei kann das Fehlteilmagazin vorzugsweise derart über oder neben einem Mehrfachspeicher an der Ausgangsseite angeordnet ist, dass dieses von dem verfahrbaren Greifer bedienbar ist. Beispielsweise kann das Fehlteilmagazin auch als weiterer Transporter ausgebildet sein. Entsprechend werden dabei in die ausgangsseitige Kabelhalterung nur die von der Kabelbearbeitungsmaschine als "gut" erkannten und/oder gekennzeichneten Kabel abgelegt.

Vorzugsweise ist in einer Ausführungsform die Kabelfördervorrichtung mit zumindest einer als Mehrfachspeicher ausgebildet, insbesondere ungeschlossenen, Kette ausgestaltet, deren Kettensegmente oder Kettenglieder trennbar sind und welche jeweils zumindest eine der Kabelhalterungen aufweisen. Die Kettensegmente sind dabei speziell derart ausgebildet, dass diese einfach, also insbesondere ohne spezielle Werkzeuge z.B. etwa durch Ein- bzw. Aushängen oder -klipsen zusätzlicher Kettenglieder am Anfang oder Ender der Kette, durch einen Benutzer und/oder durch automatisierte Stationen und/oder Baugruppen in der Kabelbearbeitungsmaschine voneinander trennbar bzw. miteinander verbindbar sind. Damit kann beispielsweise die Kette als quasi endlose Mehrfachfördereinrichtung bereitgestellt werden, indem die Kette während des Betriebs der Kabelbearbeitungsmaschine mit weiteren Kettensegmenten verlängert bzw. um bereits benutzte Kettenglieder verkürzt wird. Vorzugsweise umfasst dabei die Kabelbearbeitungsmaschine oder die Kabelfördervorrichtung dabei einen Antrieb, welcher so ausgestaltet ist, dass mit diesem die Kette förderbar ist, speziell auch wenn die Kette nicht gespannt ist, also z.B. nicht geschlossen, sondern mit jeweils offenen Enden vorliegt. Beispielsweise mit einer zumindest einseitigen, vorzugsweise zwei oder dreiseitigen Kettenführung und einem angetriebenen Kettenförderelement (Ketten-Zahnrad, Doppelzahnriemen mit den äusseren Zähnen passend zur Kette, Walking-Beam-Antrieb, Stössel, o.dgl.). Vorzugsweise werden die Kettensegmenten dabei auf Transporteinheiten wie Wagen oder dergleichen der Maschine zu- bzw. abgeführt. Vorzugsweise werden die leeren Kettensegmente in Kettenvorrats-Sammelbehältern im Bereich der Kabelfördervorrichtungen gesammelt bzw. bevorratet, beispielsweise in Boxen oder auf Rollen. Hierbei kommen vorzugsweise zusätzliche Sensoren zum Einsatz, bevorzugt Kameras, um den Füllstand zu kontrollieren. Alternativ können die beiden Kabelfördervorrichtungen auf der Eingangs- und Ausgangsseite auch so miteinander verbunden werden, dass die leeren Kettensegmente der Eingangsseite direkt zur Ausgangsseite gefördert werden. Auch kann ein weiterer Sensor zur Detektion des eingangsseitigen Ketten-Endes vorhanden sein, um die Maschine rechtzeitig vor Ketten-Ende zu stoppen.

Bevorzugterweise kann das Gesamtsystem weiters zumindest einen weiteren Greifer mit einem zugehörigen Transferantrieb ausserhalb der Einhausung der Kabelbearbeitungsmaschine aufweisen, welcher derart angeordnet und ausgebildet ist, dass dieser den Entnahmebereich und/oder den Einlegebereich des Mehrfachspeichers bedient. Dieser weitere Greifer kann dabei insbesondere einen Transfer eines Kabels zwischen dem Entnahme- oder Einlegebereich und einem externen decken- oder bodengebundenen Transportsystem ausserhalb der Kabelbearbeitungsmaschine bereitstellen, beispielsweise einem externen Trolley oder Wagen mit welchem die Kabel in einer Fabrik manuell oder automatisiert abgeführt oder bereitgestellt werden. Alternativ und/oder zusätzlich können hierbei auch noch weitere Greifer mit dazugehörendem Transfersystem eingesetzt werden, um nicht nur die Kabel bzw. die Kabelenden, sondern auch noch die Wickel langer Kabel zu bewegen.

Vorzugsweise ist die Kabelbearbeitungsmaschine und/oder die Kabeltransportvorrichtung mit zumindest einem Sensor ausgerüstet, welcher ausgebildet ist, eine Information über eine Anzahl und/oder Position der Kabel bereitzustellen, speziell in einem Mehrfachspeicher, in einer Kabelfördervorrichtung, einer alternativen Mehrfachtransporteinrichtung und/oder in einem Magazin wie hier beschrieben. Beispielsweise kann der Sensor als eine Kamera zur Bilderkennung, eine Zähleinrichtung, ein optischer, induktiver und/oder kapazitiver Sensor ausgebildet sein.

Bevorzugterweise weist die Kabelbearbeitungsmaschine an der Eingangsseite und/oder an der Ausgangsseite zwischen dem Mehrfachspeicher und der Kabelbearbeitungsvorrichtung einen Zwischenpufferspeicher für Kabel auf. Dieser ist mit zumindest einer weiteren Kabelhalterung zur Vorhaltung von zumindest einem der Kabel innerhalb der Kabelbearbeitungsmaschine ausgebildet, und mit einem Greifer bedienbar. Ein solcher Zwischenpufferspeicher kann insbesondere derart ausgebildet sein, dass er für ein definiertes Zeitfenster während eines An- und Abdockens eines Mehrfachspeichers die Kabel für/von der Kabelbearbeitungsstation vorhält, bzw. Kabel für oder von einem weiteren Greifer und/oder des ausgangsseitigen Mehrfachspeichers.

In analoger weise betrifft die Erfindung auch ein Verfahren zur automatischen Bearbeitung von Kabelenden schwerer, relativ biegesteifer Kabel. Dieses erfolgt zumindest mit einem Aufnehmen oder Bereitstellen von mehreren der Kabel in mehreren Kabelhalterungen eines als Kabelfördervorrichtung ausgebildeten Mehrfachspeichers.

Diese Mehrfachspeicher kann ein fester Teil der Kabelbearbeitungsmaschine sein, oder vorzugsweise ein mobiler Mehrfachspeicher sein, welcher mit einem Andocken des Mehrfachspeichers an einer Eingangsseite einer Kabelbearbeitungsmaschine bereitgestellt wird. Dies kann insbesondere mit einem zumindest teilweisen Einbringen des vorzugsweise mobil ausgebildeten Mehrfachspeicher in eine Einhausung der Kabelbearbeitungsmaschine erfolgen.

In einer ersten, einfachen Ausführungsvariante erfolgt ein maschinelles Entnehmen zumindest eines Kabels oder eines Kabelendes von einem der Kabel aus dem Mehrfachspeicher mit einem Übergabe- und Transfergreifer der Kabelbearbeitungsmaschine. Weiters ein Zuführen des Kabels oder Kabelendes zu zumindest einer ersten Kabelbearbeitungsstation durch den Übergabe- und Transfergreifer mithilfe dessen zumindest einen zugehörigen Transferantriebs. Nach einem Bearbeiten des Kabels oder Kabelendes in der ersten Kabelbearbeitungsstation, erfolgt ein Transferieren des Kabels oder Kabelendes von der ersten Kabelbearbeitungsstation in zumindest eine zweite Kabelbearbeitungsstation durch den Übergabe- und Transfergreifer. Nach dem Bearbeiten des Kabels oder Kabelendes in der zweiten Kabelbearbeitungsstation erfolgt ein Abführen des bearbeiteten Kabels oder Kabelendes von der zweiten Kabelbearbeitungsstation durch den Übergabe- und Transfergreifer.

In der einfachen Ausführungsvariante der Erfindung kann das Verfahren auch ausgeführt werden, indem alle Bewegungen des Kabels oder Kabelendes nur durch einen einzigen Übergabe- und Transfer-Greifer und dessen Transferantrieb ausgeführt werden. Es können dabei also alle vorgenannten Übergabe- und Transfergreifer als ein einziger Greifer ausgeführt sein, und keine Übergabe zwischen verschiedenen Greifern stattfinden. Beispielsweise ist kann speziell die Entnahme vom eingangsseitigen Mehrfachspeicher, das Zuführen zu der oder den Kabelbearbeitungsstationen und das Ablegen in den ausgangsseitigen Mehrfachspeicher mit nur einem einzigen Übergabe-und-Transfer-Greifer und dessen Transferantrieb erfolgen.

In einer zweiten, erweiterten Ausführungsvariante erfolgt ein maschinelles Entnehmen zumindest eines Kabels oder Kabelendes von einem der Kabel aus dem Mehrfachspeicher mit einem ersten Übergabegreifer und zumindest einem diesem zugehörigen Transferantrieb der Kabelbearbeitungsmaschine durch dieselbe. Im Weiteren erfolgt eine Übergabe des Kabels oder Kabelendes vom ersten Übergabegreifer an einen Transfergreifer mithilfe zumindest einem diesem zugehörigen Transferantrieb, und ein Zuführen des Kabels oder Kabelendes zu zumindest einer ersten Kabelbearbeitungsstation durch den Transfergreifer mithilfe zumindest eines diesem zugehörigen Transferantriebs. In der Kabelbearbeitungsstation erfolgt ein Bearbeiten des Kabelendes und daraufhin ein Transferieren des Kabels oder Kabelendes von der ersten Kabelbearbeitungsstation in zumindest eine zweite Kabelbearbeitungsstation durch einen Transfergreifer mithilfe zumindest eines diesem zugehörigen Transferantriebs, gefolgt von einem Bearbeiten des Kabels oder Kabelendes in der zweiten Kabelbearbeitungsstation. Optional können auch noch weitere Kabelbearbeitungsstationen in gleicher Weise folgen. Nach einer letzten der Kabelbearbeitungsstationen erfolgt ein Abführen des bearbeiteten Kabels oder Kabelendes von der zweiten Kabelbearbeitungsstation durch einen Transfergreifer mithilfe zumindest eines diesem zugehörigen Transferantriebs, und ein Übergeben des Kabels oder Kabelendes vom diesem Transfergreifer an einen zweiten Übergabegreifer, mithilfe zumindest eines diesem zugehörigen Transferantriebs.

In der erweiterten Ausführungsvariante kann das Verfahren mit einem Bewegen des oder der Kabel oder Kabelenden mit mehreren Transfergreifern ausgeführt werden, wobei für eine Übergabe des Kabelendes zwischen diesen zumindest zwei Transfergreifern wenigstens ein weiterer Übergabegreifer vorgesehen ist.

Bevorzugterweise erfolgt ein Bewegen der Kabelfördervorrichtung mit einem Antreiben der Kabelfördervorrichtung mittels einer Kraftübertragung von der Kabelbearbeitungsmaschine zum Mehrfachspeicher. Dabei kann insbesondere ein mechanisches Kuppeln während des Andockens erfolgen, durch welches Kuppeln die Kraftübertragung erfolgt.

Alternativ kann ein Bewegen der Kabelfördervorrichtung mit einem Antreiben der Kabelfördervorrichtung mittels eines lokalen Antriebs am Mehrfachspeicher erfolgen. Dabei kann das Versorgen des lokalen Antriebs mit einer lokalen Energieversorgung an der Kabelfördervorrichtung und/oder mit einem elektrischen Koppeln der Kabelfördervorrichtung an die Kabelbearbeitungsmaschine während des Andockens erfolgen.

Bevorzugterweise kann ein Einklemmen oder Einlegen der Kabel oder Kabelenden in die Kabelhalterung vorzugsweise manuell und ausserhalb einer Einhausung der Kabelbearbeitungsmaschine erfolgen.

Vorzugsweise erfolgt zumindest beim Zuführen und Transferieren der Kabel oder Kabelenden in der Kabelbearbeitungsmaschine ein Mitbewegen zumindest einer Hängetransporteinheit für einen Kabelwickel eines jeweiligen Kabels.

Bevorzugterweise umfasst das Verfahren auch ein boden- oder deckengebundenes räumliches Bewegen des Mehrfachspeichers in einem Fabrikumfeld. Insbesondere umfasst dieses Bewegen auch das vorzugsweise automatische An- und Abdocken an der Kabelbearbeitungsmaschine. Beispielsweise kann dieses Bewegen mittels eines autonom gesteuerten Transporters erfolgen, insbesondere mit einem vorzugsweise autonomen Navigieren und/oder einem Kommunizieren einer lokalen Steuereinheit des Mehrfachspeichers mit der Kabelbearbeitungsmaschine, speziell zumindest beim Andocken. Dabei kann etwa beim Einbringen des Transporters ein vorzugsweise automatisches, positionsgenaues Andocken des Mehrfachspeichers an die Kabelbearbeitungsmaschine erfolgen, insbesondere unter Herstellung einer mechanischen und/oder elektrischen Kopplung zwischen diesen.

Vorzugsweise erfolgt im Rahmen des Verfahrens auch ein Zuführen der Kabel zur Kabelfördervorrichtung mit zumindest einem Magazin für mehrere Kabel. Dabei können die Kabel z.B. durch Freigeben einer Unterseite des Magazins durch eine Betätigungseinrichtung im Bereich der Magazine mittels Schwerkraft zur Kabelfördervorrichtung zugeführt und/oder an ein darunterliegendes Magazin weitergegeben werden.

Bevorzugterweise erfolgt im Rahmen des Verfahrens zusätzlich oder alternativ auch ein Abführen der bearbeiteten Kabel mit zumindest einem Magazin für die Kabel. Dabei können z.B. die Kabel durch Freigeben einer Unterseite des Magazins durch eine Betätigungseinrichtung im Bereich der Magazine mittels Schwerkraft an ein darunterliegendes Magazin weitergegeben werden. Das Einlegen der bearbeiteten Kabel in das oberste Magazin erfolgt hierbei vorzugsweise direkt durch den Greifer, ohne dass auch auf der Ausgangsseite eine weitere Kabelfördervorrichtung vorhanden ist.

Vorzugsweise erfolgt ein Bereitstellen und/oder Abführen der Kabel mit einem Betätigen einer betätigbaren Unterseite. Durch dieses Betätigen - beispielsweise einem Klappen, Schieben, odgl. der Unterseite eines Magazins - kann ein Fallen der Kabel von einem Abschnitt des Magazins in die darunterliegende Kabelhalterung oder in einen darunterliegenden weiteren Abschnitt des Magazins ausgelöst werden. Dabei ist das Magazin vorzugsweise dem Mehrfachspeicher bzw. der Kabelfördervorrichtung zugeordnet.

Bevorzugterweise erfolgt im Rahmen des Verfahrens auch ein Andocken eines zweiten Mehrfachspeichers an einer Ausgangsseite der Kabelbearbeitungsmaschine. Dabei kann vorzugsweise auch ein maschinelles Ablegen des Kabels oder Kabelendes in einer Kabelhalterung des zweiten Mehrfachspeichers an der Ausgangsseite der Kabelbearbeitungsmaschine erfolgen, speziell durch einen Transfer- oder ÜbergabeGreifer, vorzugsweise durch einen zweiten Übergabegreifer und mithilfe eines diesem zugehörigen Transferantriebs.

Bevorzugterweise erfolgt beim Verfahren auch ein automatisches Erkennen von Fehlteilen in der Kabelbearbeitungsmaschine und ein Ablegen dieser Fehlteile in ein gesondertes Fehlteilemagazin. Dieses kann insbesondere an der Ausgangsseite der Kabelbearbeitungsmaschine und vorzugsweise mit einem automatischen Markieren und/oder unbrauchbar-machen der Fehlteile erfolgen, bevorzugt in einer dafür vorgesehenen Kabelbearbeitungsstation.

Vorzugsweise kann ein Zu- und/oder Abführen der Kabel mit einer Kabelfördervorrichtung mit zumindest einer offenen Kette als Mehrfachspeicher erfolgen. Dabei weisen die Kettenglieder oder Kettensegmente der Kette die Kabelhalterungen auf und sind leicht voneinander trennbar. Mit einem Trennen und/oder Verbinden der Kettenglieder oder Kettensegmente am Anfang oder Ende der Kette, deren Kettensegmente die unbearbeiteten oder bearbeiteten Kabel enthalten, werden dabei die Kabel zu- oder abgeführt, vorzugsweise indem die Kettensegmente auf Wagen oder dergleichen bereitgestellt und mit einem an der Kabelbearbeitungsmaschine vorhandenen Kettenteil verbunden oder von diesem getrennt werden. Die leeren Kettensegmente am anderen Ende der Kette werden hierbei vorzugsweise in Kettenvorrats-Sammelbehältern oder direkt auf den Wägen gesammelt bzw. bevorratet; oder die beiden Ketten auf Eingangs- und Ausgangsseite so miteinander verbunden, dass die leeren Kettensegmente der Eingangsseite zur Ausgangsseite gefördert werden und dort als Vorrat dienen.

Bevorzugterweise kann auch ein Zu- und/oder Abführen der Kabel mit einer Kabelfördervorrichtung mit zumindest einem externen Greifer ausserhalb der Einhausung durchgeführt werden. Dieser externe Greifer führt dabei ein Transferieren eines Kabels zwischen einem externen decken- oder bodengebundenen Transportsystem ausserhalb der Kabelbearbeitungsmaschine und einem ausserhalb der Einhausung liegenden Entnahmebereich und/oder Einlegebereich des Mehrfachspeichers durch.

Vorzugsweise erfolgt dabei ein Zwischenspeichern einer Anzahl von Kabeln in einem Zwischenpufferspeicher innerhalb der Kabelbearbeitungsmaschine, zwischen dem Mehrfachspeicher und einer der Kabelbearbeitungsstationen durch einen Greifer.

In anderen Worten betrifft eine Ausführungsform der Erfindung auch ein Zuführsystem für schwere, relativ biegesteife Kabel zu einer Kabelbearbeitungsmaschine, in welcher eine automatische Bearbeitung von Kabelenden der Kabel in wenigstens einer Kabelbearbeitungsstation bzw. Kabelendbearbeitungsvorrichtung der Kabelbearbeitungsmaschine erfolgt. Dieses Zuführsystem weist eine Kabeltransporteinheit auf, welche als ein boden- oder deckengebundener Transporter ausgebildet ist, welcher mit einem Andockmechanismus zwischen dem Transporter und einer Eingangsseite der Kabelbearbeitungsmaschine an dieser andockbar ist. Dabei weist die Kabeltransporteinheit mehrere Kabelhalterungen in Form eines Mehrfachspeichers auf, welche Kabelhalterungen derart ausgebildet sind, dass daraus eines der Kabelenden maschinell von einer Kabeltransportvorrichtung der Kabelbearbeitungsmaschine entnehmbar und zur Bearbeitung der Kabelenden mehreren Kabelbearbeitungsstationen zuführbar ist. Die Transporteinrichtung kann dabei speziell derart ausgebildet sein, dass die Kabeltransporteinheit an der Eingangsseite verbleibt und das Kabel getrennt vom der Kabeltransporteinheit von und zu den Kabelbearbeitungsstationen in der Kabelbearbeitungsmaschine bewegt wird.

In anderen Worten betrifft eine Ausführungsform der Erfindung auch ein Abführsystem für schwere, relativ biegesteife Kabel aus einer Kabelbearbeitungsmaschine, welche ausgebildet ist eine automatische Bearbeitung von Kabelenden der Kabel in wenigstens einer Kabelbearbeitungsstation bzw. Kabelendbearbeitungsvorrichtung der Kabelbearbeitungsmaschine durchzuführen. Das Abführsystem weist dabei eine Kabeltransporteinheit auf, welche als ein boden- oder deckengebundener Transporter ausgebildet ist, welcher mit einem Andockmechanismus zwischen dem Transporter und einer Ausgangsseite der Kabelbearbeitungsmaschine an dieser andockbar ist. Dabei weist die Kabeltransporteinheit mehrere Kabelhalterungen in Form eines Mehrfachspeichers auf, welche Kabelhalterungen derart ausgebildet sind, dass in dieser eines der Kabelenden maschinell durch eine Kabeltransportvorrichtung von zumindest einer der Kabelbearbeitungsstationen der Kabelbearbeitungsmaschine abführbar und in dieser Kabelhalterungen ablegbar ist. Dabei kann die Transporteinrichtung speziell derart ausgebildet sein, dass die Kabeltransporteinheit an der Ausgangsseite verbleibt und das Kabel getrennt vom der Kabeltransporteinheit von und zu den Kabelbearbeitungsstationen in der Kabelbearbeitungsmaschine bewegt wird.

Entsprechend betrifft die Erfindung auch ein System mit einer Kabelbearbeitungsmaschine und zumindest zwei Kabeltransorteinheiten sowie mit einem vorgenannten Zuführsystem und/oder Abführsystem.

Per Referenz mit einbezogen wird auch die am selben Tag von derselben Anmelderin und mit demselben Haupterfinder eingereichte Internationale Patentanmeldung PCT/IB2021/052229, welche ebenfalls eine "Kabelbearbeitung mit Zu- und Abfuhr" betrifft. Speziell mit einbezogen werden jene Absätze welche die Hängetransporteinrichtung und deren Ausführungsformen weiter detaillieren, welche in dieser Erfindung in analoger Weise anwendbar sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Die Bezugszeichen und deren Beschreibungen sind dabei, speziell wenn nicht explizit differenziert, figurenübergreifend zu betrachten. Gleiche Bezugszeichen bedeuten gleiche Bauteile, Bezugszeichen mit unterschiedlichen Indices geben funktionsgleiche oder ähnliche Bauteile an. Dem Fachmann sind auch funktionelle und logische Zusammenhänge der verwendeten Nummernkreise klar ersichtlich. Die Zeichnungen sind symbolische Darstellungen. Selbstverständlich sind alle tragenden Teile in sinnvoller Art und Weise (z.B. über eine Rahmenkonstruktion) miteinander verbunden, auch wenn das aus den Zeichnungen an manchen Stellen nicht explizit erkennbar ist (z.B. zur verbesserten Erkennbarkeit anderer Merkmale).

Es zeigen dabei:
- Fig. 1a bis Fig. 1i: schematische Skizzen von unterschiedlichen Ausführungsformen eines erfindungsgemässen Systems aus einer Kabelbearbeitungsmaschine und dem dazugehörigen Kabelbearbeitungstransportsystem,
- Fig. 2a und Fig. 2b: eine isometrische Ansicht der Ausführungsform gemäss Fig. 1c, einmal mit beiden Kabeltransporteinheiten angedockt an der Kabelbearbeitungsmaschine (Fig. 2a) und einmal losgelöst (Fig. 2b),
- Fig. 3a und Fig. 3b: eine weitere Detailansicht von Fig. 2b mit einigen Elementen ausgeblendet zur besseren Sicht auf die Kabelhalterungen auf einer als Förderband ausgeführten Kabelfördervorrichtung,
- Fig. 4a bis Fig. 4d: verschiedene Schnitt- und Detailansichten zu Fig. 2a und/oder Fig. 2b, mit Blickrichtung gemäss den dort eingezeichneten Pfeilen, mit einigen Elementen ausgeblendet zur besseren Sicht auf die Kupplung und den Andockmechanismus,
- Fig. 5a und Fig. 5b: eine speziellen Ausführungsform der Kabeltransporteinheit für den Transport von gewickelten Kabeln, ähnlich wie gezeigt in Fig. 1e,
- Fig. 6: eine isometrische Ansicht einer Kabelwickelfördervorrichtung bzw. Mehrfach-Transporteinrichtung für mehrere Hängetransporteinheiten hier ausgeführt als Walking-Beam,
- Fig. 7a bis Fig. 7e: die Funktionsweise einer Mehrfach-Transporteinrichtung mit Walking-Beam-Antriebsprinzip und rotativem, vorzugsweise elektrischem Antrieb,
- Fig. 8a bis Fig. 8f: die Funktionsweise einer Mehrfach-Transporteinrichtung mit Walking-Beam-Antriebsprinzip und translatorischem, vorzugsweise pneumatischem Antrieb,
- Fig. 9: eine schematische Skizze zu einer weiteren Ausführungsform eines erfindungsgemässen Systems gemäss Fig. 1a bis Fig. 1h aus einer Kabelbearbeitungsmaschine und dem dazugehörigen Kabelbearbeitungstransportsystem,
- Fig. 10: ein Kabel für ein System gemäss Fig. 9 in einer schematischen Ansicht,
- Fig. 11: ein Mehrfachspeicher für ein System gemäss Fig. 9 in einer perspektivischen Ansicht,
- Fig. 12: eine Ausführungsform zu einem Übergabegreifer für ein System gemäss der Fig. 9 in einer perspektivischen Ansicht, und
- Fig. 13: eine Ausführungsform zu einem Transfergreifer für ein System gemäss der Fig. 9 in einer perspektivischen Ansicht.

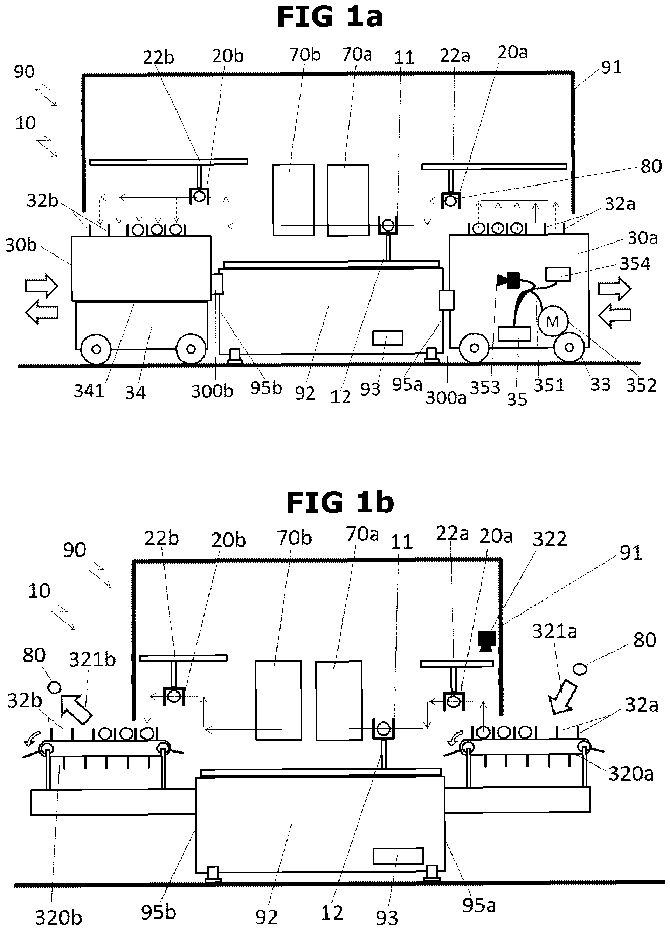

**Fig. 1a bis Fig. 1i** zeigen schematische Skizzen von diversen Ausführungsformen eines erfindungsgemässen Systems aus einer Kabelbearbeitungsmaschine 90 und dem dazugehörigen Kabeltransportsystem 10, welches sich in manchen Ausführungen bis ausserhalb der Kabelbearbeitungsmaschine 90 hinaus erstreckt.

Dieses Kabeltransportsystem 10 besteht in der Ausführungsform in **Fig. 1a** aus zumindest einem Transfergreifer 11, zwei Übergabegreifern 20a, 20b, den zu den Greifern gehörenden Transfermechanismen 12, 22a, 22b und zwei Gruppen von Kabeltransporteinheiten 30a, 30b für den Transport mehrerer Kabel 80. Diese Kabeltransporteinheiten 30a, 30b sind ausgeführt als Wagen bzw. Trolleys und können sich unabhängig von der Kabelbearbeitungsmaschine 90 bewegen. Die für das Beladen der Kabelbearbeitungsmaschine 90 verwendeten Wägen 30a können hierbei an der Eingangsseite 95a der Kabelbearbeitungsmaschine 90 andocken, mithilfe des Andockmechanismus 300a. Die für das Entladen der Kabelbearbeitungsmaschine 90 verwendeten Wägen 30b können hierbei an der Ausgangsseite 95b der Kabelbearbeitungsmaschine 90 andocken, mithilfe des Andockmechanismus 300b. Je nach Ausführungsform können die Wägen 30a und 30b jeweils unterschiedlich, also spezifisch entweder für die Eingangsseite 95a oder für die Ausgangsseite 95b, ausgebildet sein, oder die Wägen 30a und 30b können auch gleichartig ausgeführt sein, sodass derselbe Wagen 30a, 30b an der Eingangsseite 95a oder am Ausgangsseite 95b verwendbar ist.

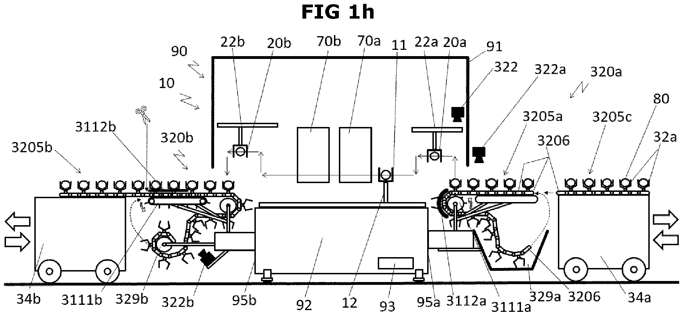

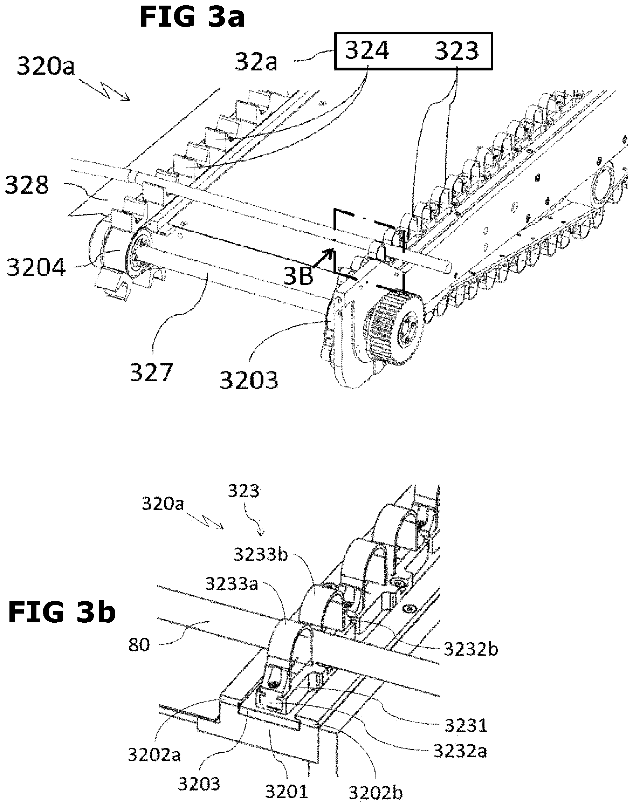

In jedem der beiden Wägen 30a, 30b sind mehrere Kabelhalterungen 32a, 32b vorgesehen. Diese können entweder als einfache Trennstege (wie hier gezeichnet in Fig. 1a) oder Auflagen 324 (wie gezeichnet in Fig. 3a) ausgestaltet sein, aber auch als gefederte Kabelklemmen 323 (wie gezeichnet in Fig. 1h, Fig. 3a und Fig 3b). Vorzugsweise kommen mehrere Kabelhalterungen 32a, 32b pro Kabel 80 zum Einsatz, vorzugsweise als Kombination mit einer Klemme 323 und einer Auflage 324, z.B. wie in Fig. 3a gezeigt.

Für die Bearbeitung der Kabel 80 werden diese nacheinander aus einer Kabelhalterung 32a bzw. eines Kabelhalterungspaars 323, 324 des Belade-Wagens 30a entnommen, vom ersten Übergabegreifer 20a. Der Übergabegreifer 20a übergibt das entnommene Kabel 80 an den Transfergreifer 11, welcher dieses für die Bearbeitung zumindest einer, vorzugswiese zumindest zwei oder mehr Kabelbearbeitungsstationen 70a, 70b zuführt. Hierzu bewegen sich neben den beiden Greifern 20a und 11 auch die diesen jeweils zugehörigen Transfermechanismen 12 bzw. 22a. Nach Abschluss aller Bearbeitungen in den hier exemplarisch dargestellten zwei Kabelbearbeitungsstationen 70a, 70b, wird das Kabel 80 vom Transfergreifer 11 und den Transfermechanismen 12 und 22b an einen weiteren Übergabegreifer 20b im Bereich der Ausgangsseite 95b übergeben, welcher es dann in eine Kabelhalterung 32b oder ein Paar aus zwei Kabelhalterungen 32b des Entlade-Wagens 30b ablegt bzw. übergibt.

Alternativ kann das Ablegen auch direkt in eine Transport- oder Verpackungsbox für fertige Kabel erfolgen.

So kann ein Kabel 80 nach dem anderen vollautomatisch bearbeitet werden, so lange bis der Belade-Wagen 30a leer ist und/oder der Entlade-Wagen 30b voll ist - dargestellt durch die dünnen Pfeile, welche die Bewegung der Kabel 80 illustrieren, wobei durchgezogene Linien die aktuelle Bewegung und unterbrochen Linien andere mögliche Bewegungen darstellen. Alle Greifer 11, 20a, 20b und die dazugehörenden Antriebsachsen bzw. Transfermechanismen 12, 22a, 22b für deren Bewegung sind hierbei Teil der Kabelbearbeitungsmaschine 90 und mit deren Steuerung 93 verbunden, z.B. über diverse Steuerungskabel (nicht dargestellt). Sowohl alle Transfermechanismen 12, 22a, 22b als auch alle Kabelbearbeitungsstationen 70a, 70b, ... sind am Rahmen bzw. Gestell 92 der Kabelbearbeitungsmaschine 90 befestigt. Um die Sicherheit des Benutzers zu gewährleisten, kann eine Einhausung 91 oder eine sonstige Sicherungseinrichtung wie etwa ein Lichtvorhang, etc. vorgesehen sein. Diese ist so ausgeführt, dass sie zumindest den Verfahrbereich aller Greifer 11, 20a, 20b und Transfermechanismen 12, 22a, 22b abdeckt aber trotzdem das (durch Blockpfeile dargestellte) Zu- und Wegfahren der Wägen 30a, 30b nicht behindert. Somit kann auch während dem Betrieb der Kabelbearbeitungsmaschine 90 ein sicheres Be- und/oder Entladen von Kabeln 80 erfolgen.

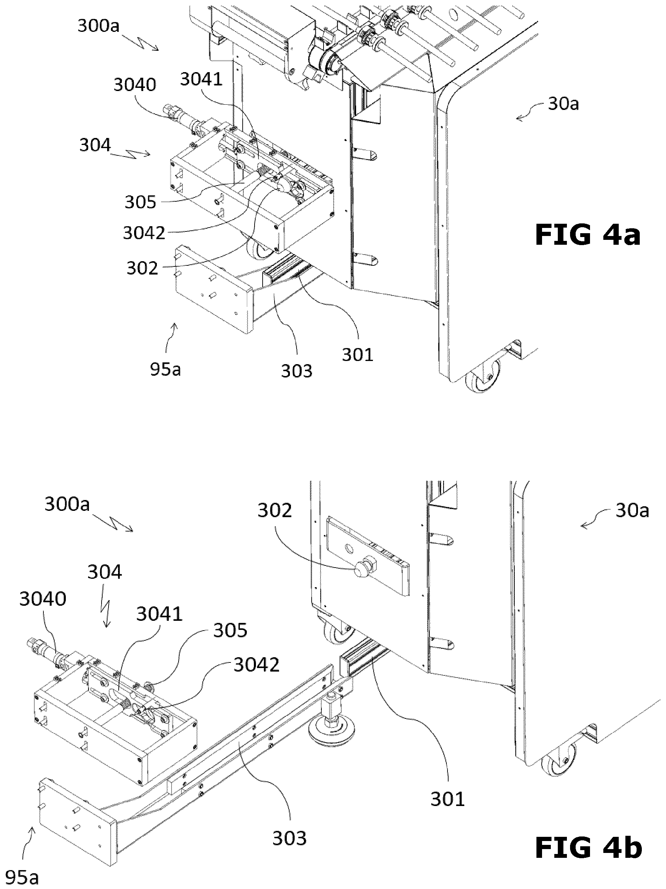

Die Andockmechanismen 300a, 300b sind so ausgestaltet, dass sie ein einfaches und zuverlässiges Andocken der Wägen 30a, 30b an die Kabelbearbeitungsmaschine 90 ermöglichen und deren Steuerung 93 auch mitteilen, ob gerade ein Wagen 30a, 30b angedockt ist oder nicht. Vorzugsweise erfolgt das Andocken hierbei mit einer definierten Position vom Wagen 30a, 30b zur Maschine 90, sodass vorzugsweise eine bekannte Entnahme- bzw. Ablageposition für die Kabel 80 gegeben ist. Zusätzlich oder alternativ kann ein solcher Positionsbezug mittels Sensoren 3042 ermittelt und der Steuerung 93 der Kabelbearbeitungsmaschine 90 bereitgestellt werden - wie dies etwa in der beispielhafte Ausführungsform in Fig. 4a und Fig. 4b gezeigt ist. Hierzu kommen vorzugsweise zusätzliche Sensoren 3042, Verriegelungseinrichtungen 304 und/oder mechanische Führungen 301, 303 bzw. Einlauf-Flächen zum Einsatz, was im Folgenden detaillierter ausgeführt wird.

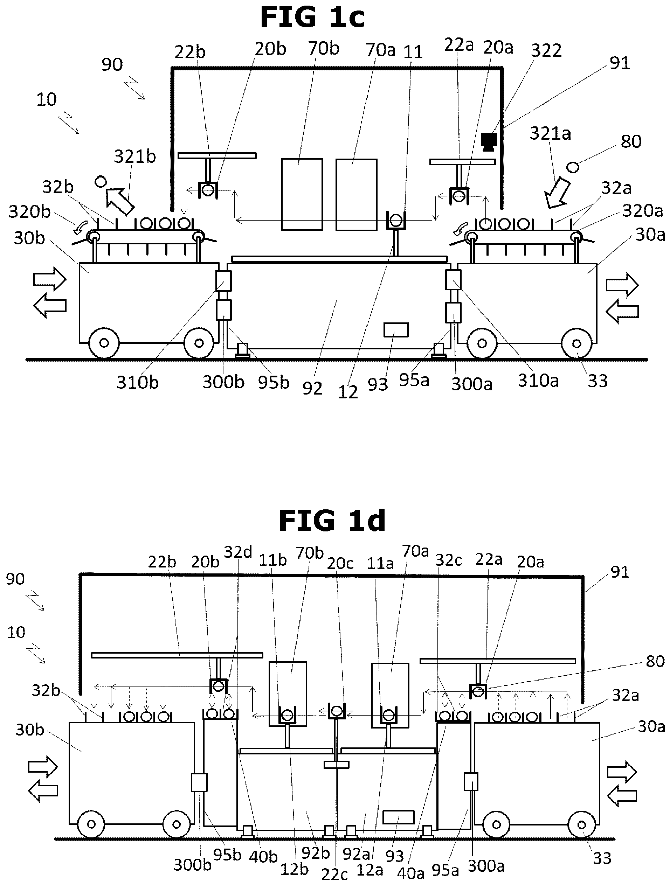

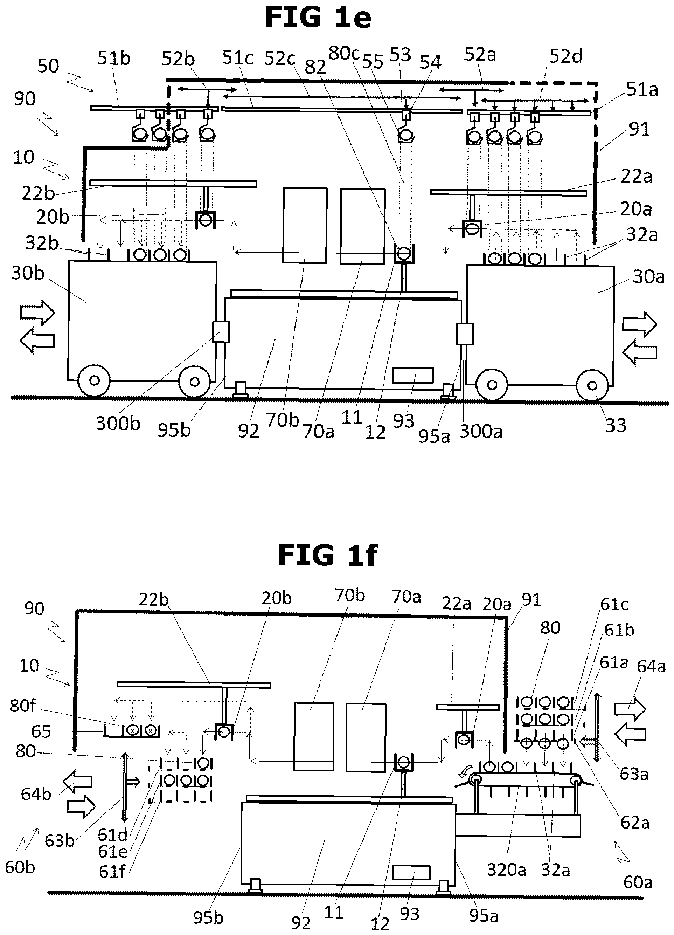

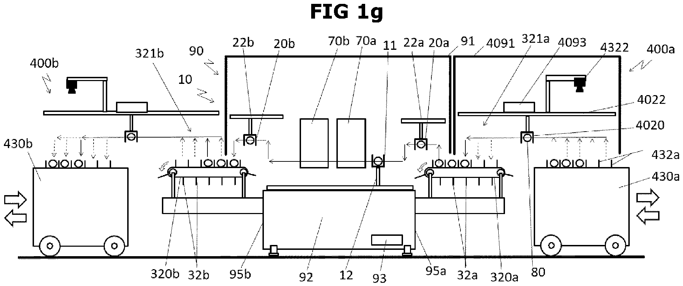

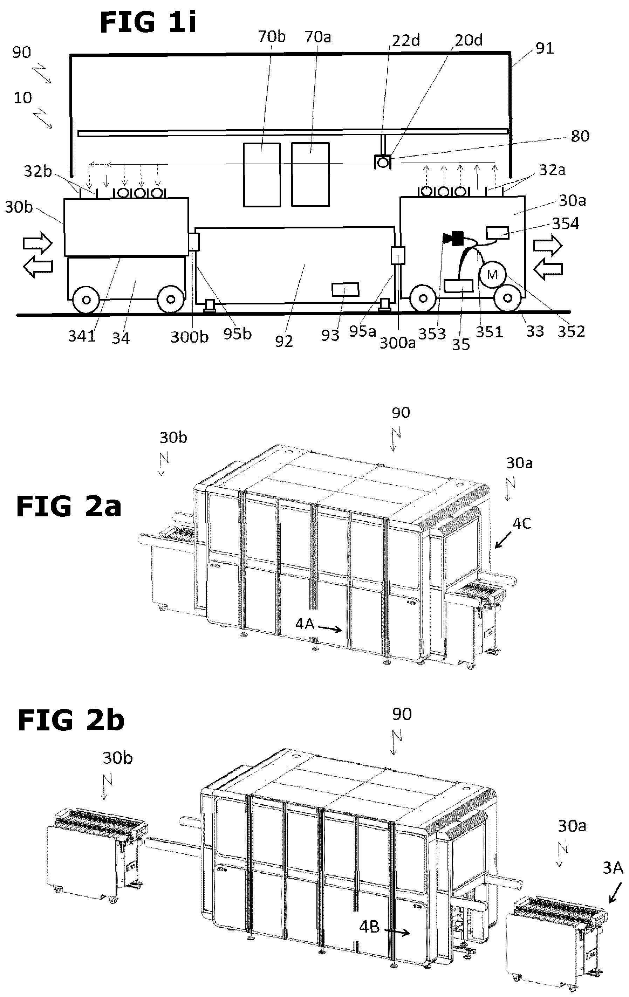

Die Mehrfachspeicher 30a, 30b, also in gezeigter Figur die Wägen 30a, 30b können in verschiedenen Ausführungsformen von sehr einfach bis hin zu "intelligent" bzw. vollautonom ausgeführt sein, wobei der eigentliche Transporter 34 von dem Mehrfachspeicher-Bereich mit den Kabelhalterungen 32a, 32b und/oder vom Andockmechanismus 300a, 300b trennbar ausgeführt sein kann. Schematisch dargestellt in Fig. 1 ist an der Eingangsseite 95a eine Ausführungsform als intelligenter Wagen 30a, beispielsweise mit einer eigenen Steuerung 35, Antriebsmotoren 352 zur Bewegung der Bewegungselemente 33, Sensoren 353 für die Navigation, eine Energieversorgung 354 und Kabeln 351 welche all diese Elemente verbinden, etc. Die Steuerung 35 kann hierbei speziell so ausgestaltet sein, dass sie mit der Steuerung 93 der Kabelbearbeitungsmaschine 90, der Steuerung 35 anderer Wägen 30a, 30b oder einer zentralen Gesamtsteuerung kommunizieren kann, vorzugsweise kabellos. Als Sensoren 353 kommen beispielsweise Kameras zum Einsatz, vorzugsweise unterstützt durch weitere Sensoren und Software-Verfahren, welche für die (Indoor-)Fahrzeug-Navigation nötige Informationen bereitstellen (LIDAR, RFID, Näherungssensoren, Leitsysteme, IPS("Indoor-GPS"), Triangulationsverfahren, SLAM, etc.). Als Energieversorgung 354 dient vorzugsweise eine wiederaufladbare Batterie (Akku), welche beispielsweise im angedockten Zustand jeweils geladen werden kann. Die Energieversorgung zum Betrieb und/oder Aufladen kann auch kabellos bzw. kontaktlos über Induktion oder Stromabnehmer mit Schleifkontakten erfolgen.

Als Bewegungselemente 33 kommen bei bodengebundenen Wagen vorzugsweise Räder zum Einsatz, idealerweise 4 pro Wagen 30a, 30b. Für maximale Manövrierfähigkeit auf engem Raum können beispielsweise Mecanum-Räder mit Zusatzrollen im Rad (z.B. wie in US3876255) eingesetzt werden, angetrieben durch jeweils einen Motor 352, vorzugsweise einen elektrischen Servomotor mit Getriebe. Daneben sind auch alternative Antriebsprinzipien nutzbar, beispielsweise mit Kugeln ähnlich wie in alten Computer-Mäusen, klassischen Rädern und Drehgelenken, und/oder Bein-ähnlichen Bewegungselementen zur Überwindung von Stufen und/oder anderen Hindernissen. Auch können die Wägen 30a, 30b mit Rädern passend zu Schienen, eine Luftkissen-Lagerung mit dazu passendem Antrieb und/oder eine Magnetschwebebahn ausgebildet sein. Neben bodengebundenen Transportsystemen können in anderen Ausführungsformen die Wägen 30a, 30b alternativ auch Decken- oder Wandgebunden ausgebildet sein.

In minimalen Ausführungsformen von Wägen 30a, 30b entsprechend der Erfindung kann auch komplett auf Antriebselemente und/oder Sensoren verzichtet werden. Solche Wägen 30a, 30b können beispielsweise vom Bedienpersonal selbst bewegt und/oder an- bzw. abgedockt werden - z.B. ähnlich wie ein Einkaufswagen im Supermarkt. Zwischen dieser minimalen und einer vollautonomen Ausführungsform können beliebige Zwischenstufen der Wägen 30a, 30b ausgebildet und gegebenenfalls auch gemeinsam in einer Anlage genutzt werden.

Besonders vorteilhaft ist es, wenn der Hersteller der Kabelbearbeitungsmaschine 90 diese Entscheidung weitgehend seinen Kunden überlässt und nur die Kabelhalterung 32a, 32b und den Andockmechanismus 300a, 300b bereitstellt; mit einer einfachen und klar definierten mechanischen Schnittstelle 341 zum eigentlichen Wagen 34, welcher dann vom Kunden nach seinen Bedürfnissen bereitgestellt und mit vorgenannten Komponenten ausgestattet werden kann. Eine Ausführungsform eines derartigen Aufbaus ist links an der Ausgangsseite 95b von Fig. 1a schematisch dargestellt. Der Mehrfachspeicher 30b, speziell die Kabelhalterungen 32b und deren Trägerstruktur mit dem daran befestigten Andockmechanismus 300b ist auf dem Transporter 34 befestigt, beispielsweise über die einfach lösbare, mechanische Schnittstelle 341. Dieser Transporter 34 kann vom Kunden selbst beschafft werden, z.B. als Standardprodukt und/oder es kann ein bereits vorhandenes Transportsystem genutzt werden. Hierbei kann er selbst entscheiden, ob ganz einfache und kostengünstigen Transporter 34 zum selbst schieben eingesetzt werden, ob intelligente Wägen 35 mit Steuerung, Antrieb und Navigation genutzt werden, oder ein Mischbetrieb dieser erfolgen soll. Beim Entscheid für einen intelligenten Wagen 35 kann ein Modell desselben Herstellers gewählt werden, wie bereits anderswo am selben Standort eingesetzt, welches erfindungsgemäss mit dem Mehrfachspeicher 30a, 30b und allenfalls mit einem mechanischen oder virtuellen/sensorbasierten Andockmechanismus ausgestattet wird. Auch ein späteres Upgrade ist jederzeit möglich, beispielsweise indem die Kabelhalterung 32b und/oder der Andockmechanismus 300b auf ein motorisiertes und/oder autonomes Transportsystem übertragen werden, z.B. mit der Schnittstelle 341. Wird der Wagen 30a direkt nach Entnahme des letzten Kabels und vorzugsweise noch während dessen Transport durch die Maschine gewechselt, kann damit eine allfällige Stillstandzeit der Maschine 90 verringert oder vermieden werden. Hierzu kommen vorzugsweise noch Zwischenpuffer 40a, 40b zum Einsatz, z.B. wie später gezeigt in Fig. 1d.

**Fig. 1b** zeigt eine alternative erfindungsgemässe Ausführungsform mit einer Kabeltransportvorrichtung 10, bei welcher die Kabelbelhalterungen 32a, 32b nicht (wie in Fig. 1a) ortsfest an ihrer Trägerstruktur montiert sind, sondern als eine Kabelfördervorrichtung 320a, 320b ausgebildet sind - im gezeigtem Beispiel, aber nicht zwingend, auf beiden Seiten der Kabelbearbeitungsmaschine 90. In einer anderen Ausführung kann z.B. die Eingangsseite 95a wie gezeigt und die Ausgangsseite 95b mit einer einfachen Ablage der fertigen Kabel in eine Transportbox, allenfalls auf einem Wagen 34, (nicht dargestellt) erfolgen. Die gezeigten Kabelfördervorrichtungen 320a, 320b sind hier Teil der Kabelbearbeitungsmaschine 90, insbesondere mit dem Rahmen 92 fest verbunden, und werden durch deren Steuerung 93 angesteuert. Separate, von der Maschine 90 trennbare Kabeltransporteinheiten 30a, 30b (wie in Fig. 1a) sind nicht vorgesehen. Der Verfahrweg der Transfermechanismen 22a, 22b für die Übergabegreifer 20a, 20b kann hierbei entsprechend kürzer ausgebildet werden, und ebenso die mechanische oder virtuelle Einhausung 91 zum Personenschutz vor beweglichen Maschinenteilen.

Diese Kabelfördervorrichtungen 320a, 320b sind bevorzugt als Förderband ausgeführt, etwa wie im Beispiel von Fig. 3a erläutert mit zumindest einem AntriebsRiemen 3203, 3204 und daran befestigten Kabelhalterungen 32a, 32b, vorzugsweise an einem ersten Riemen 3203 ausgeführt als Klemme 323 und an einem zweiten Riemen 3204 ausgeführt als Auflage 324.

Wie in der Ausführung von Fig. 1h detaillierter beschrieben, können alternativ dazu auch Ketten 3205a, 3205b statt Riemen 3203, 3204 verwendet werden, vorzugsweise mit einfach voneinander trennbaren Kettensegmenten 3206 und speziell mit einem Antrieb 3111, der auch ohne Spannung der Kette 3205a, 3205b funktioniert.

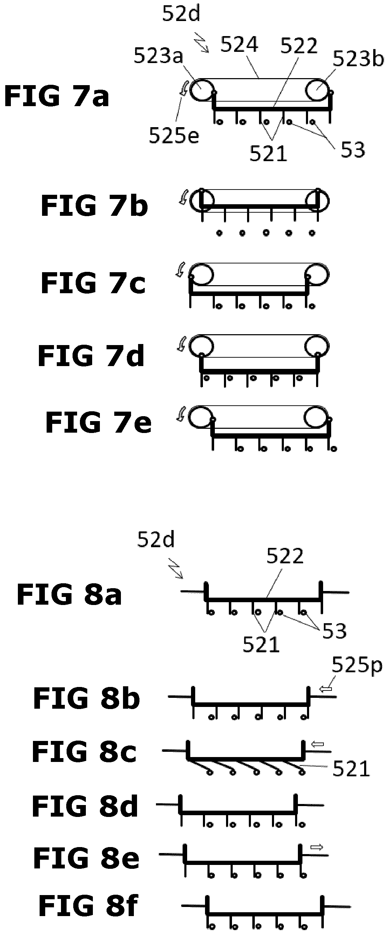

Wie in Fig. 7 und Fig. 8 beschrieben, können die Kabelfördervorrichtungen 320a, 320b weiters auch als Walking-Beams ausgeführt sein - ähnlich wie die Mehrfach-Transporteinheiten 52d für die Hängetransporteinheiten 53.

In der gezeigten Ausführungsform sind die äusseren Bereiche der beiden Kabelfördervorrichtungen 320a, 320b jederzeit für Bediener zugänglich. Zum Beladen der Maschine 90 legen die Bediener hierzu die unbearbeiteten Kabel 80 bzw. Kabelstücke in die Kabelfördervorrichtung 320a auf der Eingangsseite 95a (dargestellt durch dicken Blockpfeil im Einlegebereich 321a) und entnehmen die bearbeiteten Kabel 80 von der Kabelfördervorrichtung 320b auf der Ausgangsseite 95b (dargestellt durch dicken Blockpfeil im Entnahmebereich 321b). Dies kann auch während dem Betrieb der Maschine 90 erfolgen, vorzugsweise nicht jeweils einzeln, sondern in Tranchen, z.B. entsprechend einer Warnmeldung, wenn ein Füllstand der Kabelfördervorrichtung 320a oder 320b über- oder unterschritten wird. Für diese Füllstandsmessung dienen entsprechende Sensoren 322, vorzugsweise ausgeführt als Kameras oder berührungslose Näherungsschalter, und/oder es können auch mehrere binäre Sensoren (z.B. Induktivsensoren, kapazitive Näherungssensoren, Endschalter, Lichtschranken, etc.) vorhanden sein, deren Anordnung je nach Ausführungsform variieren kann. Hier beispielhaft dargestellt ist nur der Füllstands-Sensor 322 auf der Eingangsseite 95a. In gleicher Weise können auch auf der Ausgangsseite 95b entsprechende Sensoren 322 vorgesehen sein.

Durch diese Betriebsart kann beispielsweise ein einziger Bediener oder Roboter sowohl das Be- als auch das Entladen übernehmen, und/oder mehreren Maschinen 90 bedienen. Auf einen Wagenwechsel und einen allenfalls damit verbundenen Stillstand der Maschine 90 kann verzichtet werden. Allerdings müssen regelmässig Kabel 80 nachgelegt und entnommen werden; in dieser speziellen Ausführungsform jeweils einzeln und direkt bei der Maschine 90 - und nicht wie in den anderen Ausführungsformen als Wagenladung mit mehreren Kabeln 80, welche auch abseits der Maschine 90 vom Wagen 30a, 30b be- oder entladen und/oder weiterverarbeitet und/oder verpackt werden können. Dabei kann aber ein manuelles oder automatisiertes be- und/oder entladen 321a, 312b auch von bzw. zu einem Wagen erfolgen. Der Transport der Kabel 80 im Inneren der Kabelbearbeitungsmaschine 90 erfolgt im abgebildeten Beispiel identisch wie in Fig. 1a, mithilfe der Greifer 11, 20a, 20b und den dazu gehörenden Transfermechanismen 12, 22a, 22b von, zu und zwischen den Kabelbearbeitungsstationen 70a, 70b, kann aber auch nach einer anderen der hiergezeigten Ausführungsformen erfolgen.

**Fig. 1c** zeigt eine Ausführungsform, welche sozusagen die Hauptmerkmale und damit die Vorteile der beiden bisher aufgezeigten Varianten kombiniert. Auch hier sind die Kabelhalterungen 32a, 32b an Kabelfördervorrichtungen 320a, 320b befestigt. Anders als bei Fig. 1b sind diese Kabelfördervorrichtungen 320a, 320b allerdings Teil von Kabeltransporteinheiten 30a, 30b, welche sich unabhängig von der Kabelbearbeitungsmaschine 90 bewegen und an dieser an- und abdockbar sind - z.B. ähnlich wie die Wägen in Fig. 1a.

So sind in dieser Ausführungsform beide Betriebsmodi beim Be- und/oder EntladeVorgang möglich, also das Wechseln kompletter Wägen 30a, 30b (wie in Fig. 1a) und/oder auch das Nachlegen/Entnehmen einzelner Kabel 80 von den Kabelfördervorrichtungen 320a, 320b (wie in Fig. 1b), wie dies durch die dicken Blockpfeile 321a, 321b bzw. jene bei den Wägen 30a, 30b symbolisiert ist.

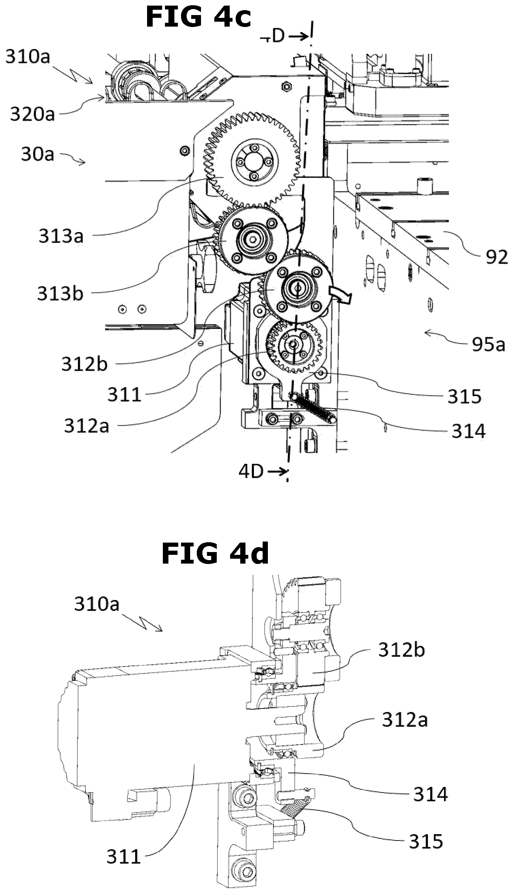

Für den Antrieb der Kabelfördervorrichtungen 320a, 320b bieten sich erfindungsgemäss bevorzugt zumindest zwei Möglichkeiten an: Die erste Möglichkeit ist ein eigener Antrieb hierzu, direkt auf dem Wagen 30a, 30b, vorzugsweise verbunden mit einer eigenen Steuerung 35 auf diesem Wagen 30a, 30b. Diese Variante ist vorteilhaft in Kombination mit intelligenten Wägen 30a, 30b (z.B. wie in Fig. 1a, rechts), welche bereits eine eigene Steuerung 35 und eine Energieversorgung 354 aufweisen, und auch für Antrieb und/oder Navigation ausserhalb der Maschine 90 nutzbar sind. Werden einfache Wägen 30a, 30b ohne eigene Steuerung eingesetzt, so kann der Antrieb 311 für die Kabelfördervorrichtung 320a, 320b vorzugsweise Teil der Kabelbearbeitungsmaschine 90 sein. Speziell kann der Antrieb für die Kabelfördervorrichtung 320a, 320b ähnlich wie in Fig. 4c oder Fig. 4d erfolgen, speziell kann der hier dargestellte schematische Block 310a, 310b, z.B. mit den später gezeigten Einzel-Elemente 311, 312a, 312b und/oder 313a, 313b ausgebildet sein. Die Energie-Übertragung zur Kabelfördervorrichtung 320a, 320b kann dabei elektrisch, bevorzugt aber rein mechanisch über eine mechanische Kopplung 310a, 310b im Bereich des Andockmechanismus 300a, 300b erfolgen. Speziell, aber nicht nur nach dem Andocken kann für ein Kalibrieren der Positionierung des Antriebs bzw. der Kabel 80 in Bezug zum Greifer 20a, 20b ein eigener Sensor oder derselbe Sensor 322 verwendet werden, welcher für das Messen des Füllstands genutzt wird, vorzugsweise ausgeführt als Kamera. Die beiden Kupplungshälften 312a, 312b und 313a, 313b können in einer Ausführungsform beispielsweise als Zahnräder oder als eine Art Zapfwelle ausgeführt werden, welche beim Andocken miteinander in Eingriff gebracht werden, z.B. wie dieses bei Fig. 4a und Fig. 4b beschreiben ist.

**Fig. 1d** zeigt ein System ähnlich Fig. 1a, mit zwei Erweiterungen, welche besonders bei sehr langen Kabelbearbeitungsmaschinen 90 vorteilhaft sein können. Die Kabelbearbeitungsmaschine 90 besteht hierbei aus 2 oder mehr Modulen mit jeweils einem Gestell 92a, 92b und einem über die volle Gestell- bzw. Modul-Länge verfahrbaren Transfermechanismus 12a, 12b mit daran befestigten Transfergreifer 11a, 11b. Zur Übergabe der Kabel 80 vom ersten Transfergreifer 11a zum zweiten Transfergreifer 11b ist ein weiterer Übergabegreifer 20c mit einem dazu gehörenden Transferantrieb 22c vorgesehen. Durch diesen Aufbau können nun zwei oder mehr Kabel 80 gleichzeitig in der Maschine 90 bearbeitet werden, was die Taktzeit verbessert. In andern Ausführungsformen kann die Kabelbearbeitungsmaschine 90 auch drei oder noch mehr Transfergreifer und dazu passend auch mehr Übergabegreifer und Transferantriebe aufweisen. Mit standardisierten Längen für die Gestelle 92a, 92b und die darauf befestigten Transfermechanismen 12a, 12b für die Transfergreifer 11a, 11b kann damit eine modular konfigurierbare Kabelbearbeitungsmaschine 90 bereitgestellt werden.

Zusätzlich ist auf der Eingangsseite 95a ein Zwischenpufferspeicher 40a mit weiteren Kabelhalterungen 32c vorgesehen. Dieser ist Teil der Kabelbearbeitungsmaschine 90 bzw. ein Modul dieser, und ist speziell dazu ausgebildet, die Zeit des Wagenwechsels zu überbrücken. Dies ist besonders vorteilhaft, wenn der Wagenwechsel länger als ein Bearbeitungszyklus dauert. Während des Normalbetriebs übergibt der Übergabegreifer 20a die von einer Kabelhalterung 32a des Wagens 30a entnommenen Kabel 80 nicht nur an den Transfergreifer 11a, sondern legt einige davon auch einer Kabelhalterung 32c des eingangsseitigen Zwischenpufferspeichers 40a ab - solange bis dieser voll ist. Das Füllen des Zwischenpufferspeichers 40a erfolgt dabei vorzugsweise in Wartezeiten zwischen den Versorgungen des Transfergreifers 11a, welche vorzugsweise priorisiert behandelt werden. Sobald alle Kabel 80 aus den Kabelhalterungen 32a des Wagens 30a entnommen sind, ertönt ein Signal für den Benutzer, den Wagen 30a zu wechseln bzw. wird dieser automatisch gewechselt. Während des Wagenwechsels werden die im Zwischenpufferspeicher 40a zwischengespeicherten Kabel 80 an den Transfergreifer 11a übergeben. So kann die Kabelbearbeitungsmaschine 90 ungestört weiterlaufen. Bei ausreichend hoher Speicherkapazität des Zwischenpufferspeichers 40a, welche insbesondere auf eine Dauer des Wagenwechsels abgestimmt ist, kann damit ein unterbrechungsfreier Betrieb erfolgen.

Ein ähnlicher Zwischenpufferspeicher 40b mit den dazu gehörenden Kabelhalterungen 32d kann alternativ oder zusätzlich auch auf der Ausgangsseite 95b vorgesehen sein - in analoger, respektiver umgekehrter Weise. Zur Überwachung des aktuellen Füllstands in den Zwischenpufferspeichern 40a, 40b können entweder alle Ablage- und Entnahmevorgänge im Steuerungsprogramm gespeichert werden, und/oder es können zusätzliche Sensoren verwendet werden (nicht dargestellt), vorzugsweise einer pro Kabelhalterung 32c, 32d und/oder ein Kamera-System, welches beispielsweise an den Übergabegreifern 20a, 20b befestigt sein kann.

**Fig. 1e** zeigt eine erweiterte Ausführungsform eines Gesamtsystems für die Bearbeitung langer, vor-abgelängter Kabelstücke, welche platzsparend zu einem Kabelwickel 80c mit zumindest einer, bevorzugt mehreren Schleifen oder Umdrehungen aufgewickelt sind. Zusätzlich zur Kabeltransportvorrichtung 10 zum Transport der Kabelendbereiche 82 ist hier eine Hänge- bzw. Wickeltransporteinrichtung 50 vorgesehen, mit entsprechend hierfür ausgebildeten Elementen in der Kabelbearbeitungsmaschine 90 sowie in den beiden Kabeltransporteinheiten 30a, 30b. Zumindest einer der Kabelendbereiche 82 der Kabelwickel 80c ist bei dessen Zu- und/oder Abfuhr in den Kabelhalterungen 32a, 32b eingelegt bzw. von den Greifern 11, 20a, 20b gehalten. Der Transport der Kabelwickel 80c erfolgt mithilfe von Hängetransporteinheiten 53, welche z.B. in den Führungen 51a, 51b, 51c geführt sind und von den Transporteinrichtungen 52a, 52b, 52c aktiv bewegt werden, oder optional allenfalls auch durch die Greiferbewegungen jeweils mitgeschleppt werden können. Jede Hängetransporteinrichtung 53 weist hierbei eine Wickel- bzw. Hängebefestigung 55 auf, hier ausgeführt als Haken, in denen der jeweilige Kabelwickel 80c hängt. Die Hängebefestigung 55 kann dabei vorzugsweise drehbar gelagert in ihrer Hängetransporteinheit 53 sein, etwa mithilfe der gezeigten drehbaren Lagerung 54.

Die mittlere Führung 51c ist im hier gezeigten Beispiel mit der Kabelbearbeitungsmaschine 90 verbunden, die beiden äusseren Führungen 51a und 51b mit den jeweiligen Kabeltransporteinheiten 30a, 30b. Die Transporteinrichtungen 52a, 52b, 52c für die Hängetransporteinheiten 53 sind Teil der Kabelbearbeitungsmaschine 90 und mit deren Steuerung 93 verbunden. In der beispielhaft gezeigten Ausführungsform weisen sie jeweils eine lineare Antriebsachse mit Führung sowie ein ein- und ausfahrbares Mitnehmerteil passend zu Gegenflächen in den Hängetransporteinheiten 53 auf. Sie sind versetzt zueinander und überlappend angeordnet, so dass bei der Übergabe einer Hängetransporteinheit 53 von einer Transporteinrichtung 52a zur nächsten 52c immer ein zumindest einseitiger Formschluss zwischen zumindest einer Transporteinrichtung 52a, 52b, 52c und der Hängetransporteinheit 53 besteht. Die Bewegungen der Transporteinrichtungen 52a, 52b, 52c erfolgen vorzugsweise weitgehend synchron mit der Bewegung des Transfergreifers 11 und/oder des Übergabegreifers 20a, 20b bzw. den dazu gehörenden Transfermechanismen 12, 22a, 22b. Dadurch wird sichergestellt, dass sich die Kabelendbereiche 82 und die dazu gehörenden Kabelwickel 80c nahezu synchron bewegen und sich nicht mit einem benachbarten Kabelwickel 80c verhaken können.

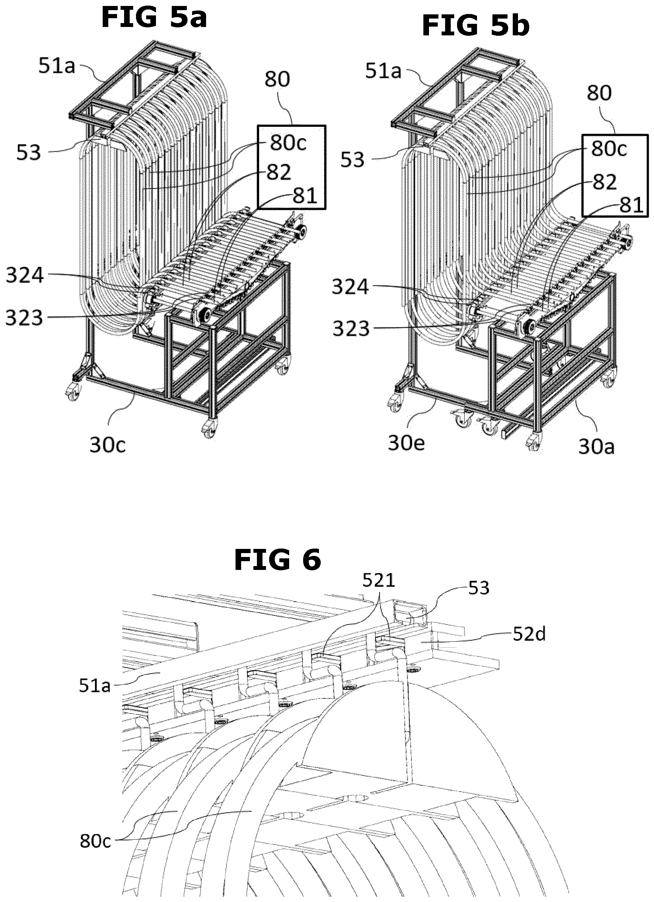

Um den zuverlässigen Nachschub von Kabelwickeln 80c aus dem Belade-Wagen 30a heraus weiter zu verbessern, kann dort eine spezielle Mehrfach-Transporteinrichtung 52d vorgesehen sein, auch "Kabelfördervorrichtung" genannt. Im Gegensatz zu den einfachen Transporteinrichtungen 52a, 52b, 52c werden hier alle Hängetransporteinheiten 53 auf der Führungsschiene 51a gleichzeitig bewegt bzw. gefördert, ähnlich wie die Kabel 80 in den Kabelfördervorrichtungen 320a, 320b. Auch diese Mehrfach-Transporteinheit 52d kann als Förderband, Förderkette oder Walking-Beam ausgeführt sein. Besonders vorteilhart ist hierbei die Ausführung als Walking-Beam. Beispielhafte Ausführungen solcher Walking-Beams und deren Funktionsweise sind in Fig. 6, Figs. 7a-e und Figs. 8a-f beschrieben. Alle Transporteinheiten 52a, 52b, 52c, 52d sind Teil der Kabelbearbeitungsmaschine 90. Alternativ können auch, zumindest einige davon, an den Wägen 30a, 30b angebracht sein - wie auch die dazu gehörenden Führungsschienen 51a, 51b. Auch kann eine weitere Mehrfach-Transporteinrichtung im Entlade-Wagen 30b angebracht sein. Auch die Befestigung der Kabelhalterungen 32a, 32b an Kabelfördervorrichtungen 320a, 320b als Bestandteil der Wägen 30a, 30b (z.B. wie in Fig. 1c) ist hier eine weitere Ausführungsform.

Um den zuverlässigen Nachschub von Kabelwickeln 80c im Belade-Wagen 30a komplett ohne eigenen Antrieb zu realisieren, gibt es erfindungsgemäss auch andere Ausführungsformen. Eine davon ist mit einem passiven Kraftelement, vorzugsweise ausgeführt als Konstantkraftfeder, welche die hinterste Hängetransporteinheit 53 in Richtung Kabelbearbeitungsmaschine schiebt und damit auch alle weiteren mitschiebt, ähnlich wie bei Patronen im Magazin eines Gewehrs.

Auch kann in einer Ausführungsform beispielsweise der Verfahrbereich der eingangsseitigen Transporteinrichtung 52a bis in den Bereich des Belade-Wagens 30a verlängert werden, und dieser vorzugsweise mit zumindest einem zusätzlichen Sensor und/oder einer entsprechenden Mechanik ausgestattet ist, um dort die nächste Hängetransporteinheit 53 zu bewegen - auch wenn dabei allenfalls deren Position nicht genau definiert und jedes Mal etwas anders ist. In einer weiteren Ausführungsform kann die Mehrfachtransporteinheit 52d Teil des Wagens 30a sein und mit der Kabelfördervorrichtung 320a für den Transport der Kabelendbereiche 82 mechanisch gekoppelt sein, wobei deren Antrieb wiederum Teil der Kabelbearbeitungsmaschine 90 sein kann, beispielsweise mit Kupplung 310a wie gezeichnet in Fig. 1c, Fig. 4c, oder Fig. 4d.

Die Verschalung 91 ist vorzugsweise so ausgeführt, dass sie das Ein- und Ausfahren der Wägen 30a, 30b mit den daran befestigten Führungsschienen 51a, 51b und den daran hängenden Kabelwickeln 80c nicht behindert und trotzdem den Benutzer weiterhin vor allen gefährlichen Bewegungen der Kabelbearbeitungsmaschine 90 schützt, insbesondere auch der Mehrfach-Transporteinrichtung 52d.

**Fig. 1f** zeigt eine alternative erfindungsgemässe Ausführungsform einer Beladevorrichtung 60a für die Eingangsseite 95a auf, mit sehr hoher Speicherkapazität bei nur geringem Platzbedarf, welche vorzugsweise für sehr kurze Kabel 80 einsetzbar ist. Hierbei kommt wieder eine Kabelfördervorrichtung 320a zum Einsatz - entweder wie hier (und z.B. in Fig. 1b) gezeichnet als Teil der Kabelbearbeitungsmaschine 90, oder als Teil einer externen Kabeltransporteinheit 30a, wie z.B. in Fig. 1c. Oberhalb der Kabelfördervorrichtung 320a ist eine Befestigung vorgesehen, auf der mehrere Magazine 61a, 61b, 61c vertikal übereinander angeordnet werden können. Diese Magazine 61a, 61b, 61c dienen der Aufnahme von mehreren Kabeln 80 und haben eine betätigbare Unterseite 62a, welche zwei Zustände einnehmen kann. Im unbetätigten Zustand (gezeigt bei den Magazinen 61b, 61c) ist diese Unterseite geschlossen, wodurch alle Kabel 80 darin liegen bleiben. Im betätigten Zustand (gezeigt bei Magazin 61a) wird die Unterseite 62a geöffnet, wodurch alle Kabel 80 in die darunterliegende Kabelfördervorrichtung 320a fallen. Zum Betätigen der einzelnen Magazine 61a, 61b, 61c bzw. deren Unterseite ist die Betätigungseinrichtung 63a vorgesehen, welche vorzugsweise mit der Steuerung 93 der Kabelbearbeitungsmaschine 90 verbunden ist. Im gezeigten Beispiel besteht diese aus einer vertikalen Antriebsachse zum Anfahren des jeweiligen Magazins 61a, 61b, 61c und einem Stössel zur Betätigung der Unterseite. Durch zumindest einen Sensor im Bereich der Kabelfördervorrichtung 320a (nicht dargestellt) - oder anhand der Strecke oder Anzahl der Bewegungen der Kabelfördervorrichtung - weiss die Steuerung 93, wenn die Kabelfördervorrichtung leer ist und startet ein Teilprogramm zum Nachfüllen. Hierzu wird zunächst das unterste Magazin 61a betätigt, wodurch die darin liegenden Kabel 80 in die Kabelfördervorrichtung 320a fallen. Danach anschliessend werden alle darüberliegenden Magazine 61b, 61c der Reihe nach betätigt, so dass die Kabel 80 immer eine Ebene tiefer fallen. So wird sichergestellt, dass das unterste Magazin 61a immer voll ist und die oberen Magazine 61bc nacheinander leer werden. Durch Zählen der Kabel 80 und/oder zusätzliche Sensoren im Bereich der Magazine (nicht dargestellt), weiss die Steuerung 93 jederzeit, wie viele Kabel 80 noch vorrätig sind und kann dem Benutzer rechtzeitig ein Warnsignal geben, wann wieder ein Austausch der leeren gegen neue, volle Magazine 61a, 61b, 61c bzw. ein Nachfüllen der Magazine 61a, 61b, 61c notwendig ist. Für den Transport der Magazine können Magazintransportvorrichtungen 64a verwendet werden, schematisch dargestellt durch zwei Blockpfeile. Diese sind vorteilhaft als Wägen bzw. Trolleys ausgeführt, mit ähnlichen Merkmalen wie bereits beschrieben für die Wägen 30a, 30b. In einer alternativen Ausführungsform kann zumindest ein Teil der Magazine 61a, 61b, 61c an der Maschine 90 angebracht sein. Optional kann auch ein automatisches Nachfüllen, beispielsweise mit einem autonomen Transportsystem und/oder Robotern erfolgen.

Eine ähnliche Vorrichtung mit mehreren übereinander gestapelten, betätigbaren Magazinen 61d, 61e, 61f kann auch als Entladeeinrichtung 60b auf der Ausgangsseite 95b verwendet werden. Hierbei sind die Magazine 61d, 61e, 61f dort angeordnet, wo bei den anderen Ausführungsformen (z.B. Fig. 1a bis Fig. 1e) die Kabelhalterungen 32b des Entlade-Wagens 30b und/oder die Kabelfördervorrichtung 320b vorgesehen ist. Die Kabel 80 werden direkt vom linken Übergabegreifer 20b in den richtigen Platz des obersten Magazins 61d gelegt. Sobald dieses Magazin 61d voll ist, werden die darin befindlichen Kabel 80 mithilfe der Betätigungseinrichtung 63b an die jeweils unteren Magazine 61e, 61f weitergereicht. Auch hier wird vorzugsweise eine Magazintransportvorrichtung 64b für den Transport der Magazine 61d, 61e, 61f verwendet.

Zusätzlich gezeigt - aber unabhängig von der Nutzung von betätigbaren Magazinen 61a, 61b, 61c, 61d, 61e, 61f an der Eingangsseite 95a oder Ausgangsseite 95a - ist auf der Ausgangsseite 95b zumindest ein weiteres Magazin 65 als Fehlteilmagazin oder Ausschussbox vorgesehen, für fehlerhaft produzierte Kabel 80f bzw. Schlechtteile. Hierzu ist der Verfahrweg des linken Übergabegreifers 20b derart erweitert, das auch noch alle Plätze dieses weiteren Magazins 65 anfahrbar sind. Das weitere Magazin 65 für die fehlerhaften produzierten Kabel 80f kann natürlich auch bei allen anderen Ausführungsformen der Ausgangsseite 95b - z.B. in Fig. 1a bis Fig. 1i - zum Einsatz kommen. Vorzugsweise werden die fehlerhaft produzierten Kabel 80f vor der Ablage im weiteren Magazin 65 noch markiert und/oder unbrauchbar gemacht, z.B. durch einen zusätzlichen Schnitt in einer dafür vorgesehenen Schlechtteil-Schneide-Station (nicht dargestellt), um Verwechselungen mit korrekt produzierten Kabeln 80 auszuschliessen.

Neben einem Ablegen in einzelne Magazinfächer, können die fehlerhaft produzierten Kabel 80f auch alle in eine gemeinsame Ausschussbox ausgeworfen werden.

**Fig. 1g** zeigt ein erweitertes erfindungsgemässes Gesamtsystem ähnlich wie in Fig. 1b, bei welchem das Be- und/oder Entladen vollautomatisch erfolgt. Hierzu ist das System erweitert um die automatische Beladevorrichtung 400a im Einlegebereich 321a und die automatische Entladevorrichtung 400b im Entladebereich 321b.

Die automatische Beladevorrichtung 400a besteht im gezeigten Beispiel aus zumindest einem Greifer 4020, einem ihn bewegenden Transfermechanismus 4022 und einer eigenen Steuerung 4093. Dieser Greifer 4020 wird zur Unterscheidung auch als externer Greifer 420 bezeichnet. Im Bereich dieser Beladevorrichtung 400a kann ein Beladewagen 430a mit daran befestigten Kabelhalterungen 432a und darin befindlichen Kabeln 80 positioniert werden. Dieser Beladewagen 430a kann ähnlich ausgeführt sein wie die in Fig. 1a beschriebenen Transportwägen 30a, 30b und optional auch mit einem Andock-Mechanismus (nicht gezeichnet) zur genauen Positionierung an der Kabelbearbeitungsmaschine 90 ausgerüstet sein, vorzugsweise für eine mechanische Positionierung, alternativ aber auch für eine virtuelle Positionierung mit eine kontaktlosen Positionserfassung über Sensoren. Zur Überwachung des Füllstandes dient vorzugsweise eine Kamera 4322. Optional kann auch noch eine eigene Einhausung 4091 der Be- und/oder Entladevorrichtung 400a, 400b vorgesehen sein. Die komplette Beladevorrichtung 400a kann dabei insbesondere so ausgestaltet sein, dass sie möglichst schnell und einfach an der Kabelbearbeitungsmaschine 90 angebracht und auch wieder entfernt werden kann, um zwischen manuellem Einzel-Beladen (wie ein Fig. 1b) und vollautomatischem Wagen-Beladen zu wechseln. Neben einem gänzlichen entfernen kann alternativ z.B. auch mit einem Öffnen oder Entfernen der Einhausung 4091 der Greifer 4020 mit dem Transfermechanismus 4022 in eine Parkposition gebracht und zusammen mit ihm deaktiviert werden, und der Einlegebereich 321a zur manuellen Bedienung zugänglich gemacht werden.

Die Kabel 80 werden im vollautomatischen Betrieb nacheinander von den Kabelhalterungen 432a des Beladewagen 430a in die Kabelhalterungen 32a der eingangsseitigen Kabelfördervorrichtung 320b transportiert, mithilfe des Greifers 4020 und des Transfermechanismus 4022. Hierzu unterstützt das Bild der Kamera 4322. Bei ausreichender Anzahl an Freiheitsgraden im Transfermechanismus 4022 und entsprechender Intelligenz der Steuerungssoftware zur Interpretation des Kamerabilds kann hierbei auf ein positionsgenaues Andocken des Wagens und damit auf einen Andock-Mechanismus verzichtet werden. Hierzu kann der Transfermechanismus 4022 ganz oder teilweise mithilfe eines Standard-Knickarm-Industrieroboters realisiert werden. Bevorzugt sind alle Antriebsachsen des Transfermechanismus 4022 und des Greifers 4020 mit Kraftmess-Systemen, weiteren Sensoren und einer Software ausgestaltet, welche für den kollaborativen Betrieb zusammen mit Menschen ausgebildet und zertifiziert sind. Bei dieser Ausgestaltung kann auf eine Einhausung 4091 der automatischen Beladevorrichtung 400a verzichtet werden - so wie gezeichnet auf der linken Seite bei der Entlade-Vorrichtung 400b und dem dazu gehörenden Entladewagen 430b. Diese Elemente sind ähnlich bzw. identisch aufgebaut wie die gerade beschriebenen.

**Fig. 1h** zeigt eine weitere Möglichkeit, um die beiden Betriebsmodi des Einzel-Beladens (ähnlich wie in Fig. 1b) und des Nachladens kompletter Wagenladungen von Kabeln 80 (ähnlich wie in Fig. 1a) bereitzustellen. Hierzu sind die beiden Kabelfördervorrichtungen 320a, 320b mit Ketten 3205a, 3205b statt Riemen ausgeführt, deren Kettensegmente 3206 sich einfach durch den Bediener öffnen und schliessen bzw. zusammenhängen und trennen lassen, vorzugsweise ohne Werkzeug bzw. ähnlich wie bei einer Energiekette/Schleppkette (z.B. von Kabelschlepp oder Igus), idealerweise sogar automatisiert durch die Kabelbearbeitungsmaschine 90. Der Antrieb 3111a, 3111b ist hierbei so ausgestaltet, dass er die Kette 3205a, 3205b und die daran befestigen Kabelhalterungen 32a mit darin fixierten Kabeln 80 auch fördern kann, wenn die Kette 3205a, 3205b nicht gespannt ist - ähnlich wie beispielweise bei Einzugs-Antrieben von Crimp-Kontakten oder anderem auf Bändern/Ketten befestigtem Verbrauchsmaterial in Kabelbearbeitungsstationen 70. Hierzu kann - wie gezeichnet auf der Eingangsseite 95a - direkt gegenüber vom Antriebsrad 3111a eine passende Gegenfläche 3112a vorgesehen sein, welche den permanenten Formschluss zwischen Kette 3205a und Antriebsrad 3111a sicherstellt. Diese einfache Bauform ist ausreichend und sinnvoll an der Eingangsseite 95a, bei welcher nur gezogen werden muss. Alternativ dazu und speziell zweckmässig an der Ausgangsseite 95b - wo die mit Kabeln 80 beladene Kette 3205b hauptsächlich gestossen wird - ist ein spezieller Antrieb 3111b, bei welchem statt des Antriebsrads 3111a mit Zähnen ein Antriebsriemen mit Innen- und Aussenzähnen verwendet wird, und eine dazu passende, gerade Gegenfläche 3112b. Ein derartiger oder funktional ähnlich ausgestalteter Antrieb bietet den Vorteil, dass er im linearen Teil der Förderstrecke verwendet und somit an einem Ort platziert werden kann, bei dem der Grossteil der Kette weiterhin vorwiegend gezogen statt gestossen wird, womit er prozesssicherer ist. Alternativ (nicht gezeichnet) kann auch auf der Ausgangsseite 95b ein einfacher Antrieb identisch zur Eingangsseite 95a verbaut sein, und die Kette 3205b in einer Führung laufen, welche ein unerwünschtes Einknicken der Kettenglieder beim Stossen verhindert.

Für ein Beladen mit einer kompletten Wagenladung kann ein offenes Stück einer Kette 3205c auf einen Transportwagen 34a gelegt und mit Kabeln 80 bestückt werden - was auch entfernt von der Kabelbearbeitungsmaschine 90 erfolgen kann. Dieser Transportwagen 34a wird in den Bereich der Eingangsseite 95a gebracht und ein Benutzer oder die Maschine verbindet die Kette 3205c auf dem Transportwagen 34a mit der Kette 3205a in der Kabelfördervorrichtung 320a - dargestellt durch den Pfeil zwischen den Kettensegmenten 3206 an den jeweiligen Enden der Kette 3205a auf der Maschine und der Kette 3205c auf dem Transportwagen 34a.

Die somit verlängerte bzw. zusammengefügte Kette ermöglicht nun die Verarbeitung aller Kabel 80, welche auf dem Transportwagen 34a transportiert worden sind. Bei einem Wagenwechsel muss die Maschine nicht angehalten werden - wie z.B. bei Fig. **1c** - da ein Teil der Kette 3205a an der Maschine verbleibt und einen Kabelvorrat für eine Wechseldauer des Transportwagens 34a bereitstellt. Auch entfällt dabei eine Beschränkung auf kurze Kabel wie beim Magazin-Beladen in Fig. 1f. Es kann damit auch auf aufwändige Übergabegreifer mit dazugehörenden Transfersystemen wie in Fig. 1g verzichtet werden. In einer solchen Ausführungsform mit trennbaren Ketten 3205a, 3205b, 3205c kann in einfacher Weise das Verbinden und Lösen der Kettensegmente 3206 sowie das Nachfüllen und Leeren der Bereiche unter den Kabelfördervorrichtungen 320a, 320b vorzugsweise händisch durch einen Benutzer und/oder optional zumindest teilweise automatisiert erfolgen.

Die Ausgangsseite 95b kann dabei funktionell ähnlich ausgebildet sein - jedoch entsprechend in umgekehrtem Ablauf. Hier wird die Kette 3205b vom Benutzer nicht zusammengefügt, sondern Stücke in passender Länge abgetrennt, z.B. entsprechend zur Länge eines Transportwagens 34b - hier dargestellt durch den Pfeil mit dem Scherensymbol. Bei entsprechender Ausgestaltung des Trenn- und Verbindungsmechanismus in den Kettensegmenten 3206 ist auch ein automatisches Trennen mithilfe von Antrieben der Kabelbearbeitungsmaschine 90 durchführbar (nicht dargestellt). Die Transportwägen 34a, 34b können in einer MinimalKonfiguration sehr einfach ausgestaltet sein; eine planare Auflagefläche und Räder reichen aus, optional mit Schienen oder Führungen für die Kette 3205b. Auch auf ein präzises Andocken relativ zur Kabelbearbeitungsmaschine 90 kann in einfachen Ausführungen verzichtet werden, lediglich sollte eine Einrichtung ein Wegschieben zumindest des ausgangsseitigen Transportwagens 34b durch die Kette3205b verhindern, beispielweise mit einer fuss-betätigten Feststellbremse an einer der Rollen, durch ein Einhaken an der Maschine, etc. (beides nicht dargestellt).

Für das Handling der leeren Kettensegmente 3206 sind unter den Kabelfördervorrichtungen 320a, 320b vorzugsweise Kettenvorrat-Sammeleinrichtungen 329a, 329b vorgesehen, eingangsseitig vorzugsweise ausgeführt als Box 329a und ausgangsseitig vorzugsweise als Rolle 329b. Deren Füllstand kann durch entsprechende Sensoren 322b überwacht werden (hier beispielhaft nur eingezeichnet bei der Ausgangsseite 95b). Zusätzlich zu diesen Füllstandsensoren 322b und dem Kabel-Füllstandsensor 322 ist vorzugsweise auch noch ein weiterer Sensor 322a auf der Eingangsseite 95a vorgesehen, welcher das Ende einer offenen Kette 3205a detektiert und in diesem Fall ein Nachlade- und/oder Stopp-Signal generiert.

Alternativ zu den beiden Kettenvorrat-Sammeleinrichtungen 329a, 329b auf beiden Seiten können die Ketten 3205a, 3205b auf beiden Seiten auch so miteinander verbunden werden, dass die leeren Kettenglieder 3206 vor der eingangsseitigen Kabelfördervorrichtung 320a zur ausgangsseitigen Kabelfördervorrichtung 320b gefördert werden.

Sind die Kettensegmente 3206 so ausgestaltet, dass sie auch ein maschinelles Öffnen ermöglichen, können die leeren Kettenstücke auf der eingangsseitigen Kettenvorrat-Sammelvorrichtung 329a auch bereits auf die zu den Wägen 30a, 30b passenden Längen vorbereitet abgelegt werden. Auch können die geleerten und in passender Länge vorbereiteten Kettenglieder 3206 an der Eingangsseite direkt in einem unteren Wagenbereich auf dem Transportwagen 34a wieder abgelegt werden (statt in einer Kettenvorrat-Sammeleinrichtung 329a). Analog dazu kann auch ein Vorrat von leeren Kettengliedern 3206an der Ausgangsseite von einem unteren Bereich des Transportwagens 34b entnommen werden (statt von einer Kettenvorrat-Sammeleinrichtung 329b). In beiden Fällen erfolgt bei einen Wagenwechsel an entsprechender Stelle (z.B. unten und/oben oben) ein manuelles oder automatisches Verbinden und Trennen der Kette. Damit können mit dem Wagenwechsel sowohl neue als auch verbrauchte Kettenglieder zu- und abgeführt werden.

Für eine bessere Fixierung der Kabel 80 sind die Ketten 3205a, 3205b bevorzugt so breit ausgeführt, dass mehrere Kabelhalterungen 32a pro Kabel 80 daran befestigt werden können, und/oder es laufen mehrere Ketten parallel (ähnlich wie bei den Riemen 3203, 3204 in Fig. 3a). Auch kann es vorteilhaft sein, nur diejenigen Kettenglieder oder Kettensegmente 3206 (bzw. dort nur die jeweils richtige Seite) mit dem Mechanismus zum besonders einfachen Öffnen und Schliessen der Kettenverbindung auszurüsten - vorzugsweise als mehrgliedrige Kettenteile, deren Länge zu den Wagen passen. So können nicht nur Herstellkosten gespart werden, sondern es wird auch verhindert, dass der Benutzer "unpassende" Längen erzeugt, die nicht zur Länge der Transportwägen 34a, 34b passen. Wie bereits erwähnt, kann ein solcher Mechanismus so ausgestaltet sein, dass er neben oder alternativ zu einem manuellen auch ein automatisiertes Öffnen und Schliessen ermöglicht. In Ausführungsformen mit automatisierter Kettentrennung/Verbindung kann auch ein vollautomatischer Betrieb, z.B. mit automatischem Wagenwechsel und/oder autonom fahrenden Wägen implementiert werden.

In einer Ausführungsform kann eine Kabelfördervorrichtung 320a, 320b nach dem gerade beschriebenen automatischen Fördersystem mit Ketten 3205a, 3205b in einfacher Weise zu einem "einfachen" Betriebsmodus für das Be- und/oder Entladen einzelner Kabel 80 - ähnlich wie z.B. in Fig. 1b - umrüstbar ausgebildet sein. Dies kann beispielsweise erfolgen, indem die Kabelfördervorrichtung 320a, 320b derart ausgebildet ist, dass die Kette 3205a, 3205b sowohl als eine oben beschriebene aufgetrennte Kette mit offenen Enden als auch zu einer geschlossenen Kette zusammengefügt bereitstellbar ist, speziell ausgebildet mit entsprechenden Führungen oder Pfaden (nicht dargestellt) für die jeweilige Kettenkonfiguration welche wahlweise benutzbar und umstellbar oder umbaubar sind. Beispielsweise kann dann ein vorzugsweise manuelles Zusammenfügen der Ketten 3205a, 3205b zu einem geschlossen Loop oder einer Schleife erfolgen - wie dies optional mit den gestrichelten Pfeilen dargestellt ist, womit die Kabelfördervorrichtung zu einem kontinuierlich umlaufenden Mehrfachspeicher umkonfiguriert ist, welcher einzeln mit Kabeln 80 beladen oder entladen werden kann, ähnlich wie gezeigt in Fig. 1b.

**Fig. 1i** zeigt eine vereinfachte Bauform ähnlich wie Fig. 1a. Hier wird der gesamte Kabeltransport nur von einem einzigen Greifer, dem Transfer- und Übergabegreifer 20d realisiert. Dabei erstreckt sich ein einziger zum Greifer 20d gehörender Transferantrieb 22d und somit der Arbeitsbereich des Greifers 20d über die ganze Maschine 90. Die Maschine 90 ist also zu einem übergabelosen Kabeltransport mittels des einen einzigen Greifers 20d von einem Mehrfachspeicher 32a an der Eingangsseite, durch die Kabelbearbeitungsstationen 70a, 70b und zu einem zweiten Mehrfachspeicher 32b an der Ausgangsseite ausgebildet.

**Fig. 2a** und **Fig. 2b** zeigen eine isometrische Ansicht der Ausführungsform wie beispielsweise in Fig. 1c. In **Fig. 2a****,** einmal mit beiden Kabeltransporteinheiten 30a, 30b angedockt an der Kabelbearbeitungsmaschine 90 und in **Fig. 2b** einmal losgelöst. Auch eingezeichnet sind in Fig. 2a die Blickrichtung für die Fig. 4a, und Fig. 4c bzw. in Fig. 2b die Blickrichtungen für Fig. 3a und Fig. 4b - dargestellt durch die Pfeile 3A, 4A, 4B und 4C.

**Fig. 3a** zeigt eine Detailansicht von Fig. 2a, gemäss dem dort eingezeichneten Pfeil 3A, mit einigen Elementen ausgeblendet zur besseren Sicht auf die Kabelhalterungen 32a und die Kabelfördervorrichtung 320a, welche diese bewegt, hier ausgeführt als Förderband. Im gezeigten Beispiel umfasst jede Kabelhalterung 32a jeweils eine Klemme 323 und eine Auflage 324. Das Förderband 320a besteht aus zwei Riemen oder Zahnriemen 3203, 3204, welche über eine gemeinsame Welle 327 angetrieben werden. Auch auf der Gegenseite im Bereich von Andockmechanismus 300a (siehe auch Fig. 4a) und Kupplung 310a (siehe auch Fig. 4c) gibt es eine gemeinsame Welle (nicht sichtbar). Um die beiden Kabelfördervorrichtungen 320a, 320b für die Eingangsseite und die Ausgangsseite identisch auszuführen, sind bevorzugt auf beiden Wellen Zahnräder angebracht. Die Klemme 323 ist befestigt am Riemen 3203 und die Auflage ist befestigt am anderen Riemen 3204. Die Kabel 80 (hier nur eines davon dargestellt) sind dabei befestigt in jeweils einer Klemme 323 und der dazu gehörenden Auflage 324, mit dem zu bearbeitenden Kabelende im Bereich der Klemme 323. Um auf der gegenüberliegenden Seite im Bereich der Auflage 324 auch bei längeren Kabeln 80 ein Hängenbleiben und damit verhaken benachbarter Kabel zu verhindern, ist dort eine Führung 328 vorgesehen, hier ausgeführt als Blech mit glatter Auflagefläche. Alternativ kann auch eine Ausführung mit mehreren Rollen zum Einsatz kommen. Alternativ können für sehr kurze Kabel 80 auch beidseitig Auflagen 324 verwendet werden, um das Einlegen der Kabel zu vereinfachen, was vorteilhaft ist beim vollautomatischen Beladen des Förderbands 320a - z.B. mit einer Magazin-Beladeeinrichtung 60 aus Fig. 1f. Auch können beidseitig Klemmen 323 verwendet werden. Statt (Zahn-) Riemen 3203, 3204 können auch Ketten 3205a, 3205b, 3205c verwendet, vorzugsweise mit einfach teilbaren Kettensegmenten 3206 und einem Antrieb 3111 der auch ohne Kettenspannung funktioniert, z.B. wie in Fig. 1h erläutert. Statt zwei Riemen 3203, 3204 oder Ketten 3205a, 3205b, 3205c kann auch ein breiter Riemen oder eine breite Kette verwendet werden, oder auch drei oder noch mehrere bzw. ein einziges entsprechend breites Förderband. Werden in einer Ausführungsform keine Klemmen 323, sondern nur Auflagen 324 verwendet (z.B. für sehr kurze Kabel), wäre auch die Verwendung eines Walking-Beam-Antriebs zur Kabel-Förderung nutzbar, z.B. ähnlich wie verwendet für die Mehrfach-Transporteinrichtung 52d für die Hängetransporteinheiten 53 wie in Figs. 7 und Figs. 8 beschrieben.

**Fig. 3b** zeigt eine Detailansicht von Fig. 3a, mit Schnitt gemäss der dort eingezeichneten Schnittebene 3B, durch den Riemen 3203 und die für ihn vorgesehenen Führungselemente 3201, 3202a, 3202b, hier ausgeführt mit einer Platte 3201 und zwei Blechen 3202a, 3202b. Auf dem Riemen 3203 befestigt sind die Kabelklemmen 323. Diese bestehen beispielsweise aus jeweils zwei Klemmbacken 3233a, 3233b, zwei Haltern 3232a, 3232b und einer Aufnahme 3231. Die beiden Klemmbacken 3233a, 3233b sind aus elastischem Material und an den beiden Haltern 3232a, 3232b befestigt, welche hier in einem C-Profil der Aufnahme 3231 fixiert sind. Sie formen ein "M", ähnlich den "golden arches" des Mc-Donalds-Logos, deshalb werden diese Klemmen umgangssprachlich auch "Mc-Donalds-Klemmen" genannt und sind in ähnlicher Form beispielsweise auch von Werkzeugklemmleisten bekannt. In der gezeigten Ausführungsform kann durch Verschieben der Halter 3232a, 3232b im C-Profil die Vorspannkraft der Klemmbacken eingestellt werden, passend zum Typ und Durchmesser des Kabels 80. Die Aufnahme 3231 und damit die Kabelklemme 323 ist über zwei Schrauben am Riemen 3203 fixiert, welche quer zu dessen Förderrichtung angeordnet sind. So wird ermöglicht, dass die Kabelklemmen 323 problemlos bei der Welle 327 (siehe auch Fig. 3a) um die Kurve bewegt werden. Die Befestigung der Auflagen 324 am Riemen 3204 (siehe auch Fig. 3a) und auch die Führung dieses Riemens 3204 erfolgt in analoger Weise.

**Fig. 4a bis Fig. 4d** zeigen verschiedene Schnitt- und Detailansichten von Fig. 2, mit Blickrichtung gemäss den Pfeilen 4A, 4C in Fig. 2a, dem Pfeil 4B in Fig. 2b und dem Pfeil 3D in Fig. 3c; wobei einige Elementen teilweise ausgeblendet sind, um bessere Sicht auf die eingangsseitige Kupplung 310a und den eingangsseitigen Andockmechanismus 300a zu haben.

Die **Fig. 4a** und **Fig. 4b** zeigen den eingangsseitigen Andockmechanismus 300a. In Fig. 4a im Zustand "zusammengefahren und verriegelt" - wie in Fig. 2a. In Fig. 4b im Zustand "auseinandergefahren" - wie in Fig. 2b. Die Blickrichtung entspricht den beiden Pfeilen 4A, 4B, welche in Fig. 2a bzw. Fig. 2b gezeigt sind.

Im gezeigten Beispiel einer Ausführungsform befindet sich auf dem Wagen 30a ein Verriegelungszapfen 302 und eine Führung 301, hier ausgeführt als Rechteckprofil. Auf der Eingangsseite 95a der Kabelbearbeitungsmaschine 90 befinden sich die dazu passenden Gegenstücke - die Verriegelungseinrichtung 304 und die Führung 304, hier ausgeführt als U-Profil. Die beiden Teile der Führung 303, 304 werden beim Andocken ineinandergeschoben, und somit der Wagen 30a exakt in Bezug auf die Kabelbearbeitungsmaschine 90 mechanisch positioniert bzw. zentriert. Um Ungenauigkeiten zu Beginn auszugleichen, sind auf beiden Seiten der Führung 303, 304 grosszügige Einlauf-Flächen vorgesehen. Um den Bedienkomfort zu erhöhen und Beschädigungen zu vermeiden, kann zusätzlich noch ein Dämpfer 305 vorgesehen sein, hier ausgeführt als Welle mit gefederter Scheibe und befestigt auf der Kabelbearbeitungsmaschine 90. Ist der Wagen 30a korrekt relativ zur Kabelbearbeitungsmaschine 90 positioniert, so wird dies durch einen Sensor 3042 detektiert und die Verriegelungseinrichtung 304 aktiviert. Diese besteht im gezeigten Beispiel aus einer Schiebeplatte 3041 und einem Antrieb 3040, hier ausgeführt als Pneumatikzylinder. Zum Verriegeln wird diese Schiebeplatte 3041 durch den Antrieb 3040 bewegt. Dadurch fahren deren Wirkflächen in eine Nut im Verriegelungszapfen 302 und erzeugen somit eine formschlüssige Verbindung, welche den Wagen 30a an der Kabelbearbeitungsmaschine fixiert. Zum Lösen dieser Fixierung fährt die Schiebeplatte 3041 wieder heraus. Auf der Ausgangsseite 95b ist nochmals genau derselbe Mechanismus verbaut.

Der Verriegelungszapfen 302 und der Dämpfer 305 können in einer anderen Ausführungsform auch jeweils beide auf dem Wagen 30a, 30b oder beide auf der Kabelbearbeitungsmaschine 90 befestigt sein. Sind sie beide auf derselben Seite, können sie auch als ein gemeinsames Funktionselement ausgebildet sein (nicht gezeichnet).

In anderen Worten wird in einem Teilaspekt der vorliegenden Erfindung ein Kabeltransportwagen 30a oder einen Ankoppel-Aufsatz für einen solchen bereitgestellt, welcher ausgebildet ist mit einem Andockmechanismus 300a, welcher aufweist: ein Führungselement, vorzugsweise ausgebildet als Fortsatz mit im wesentlichen parallelen Seitenflächen, einen vorzugsweise rotationssymmetrischen Verriegelungszapfen 302 mit einer vorzugsweise keilförmigen Einlaufgeometrie (Anfasung) an dessen freiem Ende und einer Nut oder Durchmesserverringerung (Einstich) hinter dem freien Ende. Beziehungsweise wird eine Kabelbearbeitungsmaschine 90 oder eine Funktionsmodul für eine solche bereitgestellt, welche mit einem Andockmechanismus 300a ausgebildet ist, welcher aufweist: einen sich verjüngenden Einlaufbereich für Seitenflächen eines Führungselements eines Wagens, zumindest eine vorzugsweise kreisrunden Öffnung für einen Verriegelungszapfen 302 des Wagens mit einer Verriegelungseinheit 304 hinter der Öffnung welche ausgebildet ist in einer Verriegelungsposition den Verriegelungszapfen 302 formschlüssig zu halten und in einer Öffnungsposition diesen freizugeben, und mit einer Auflauffläche für ein Dämpfungselement des Wagens, wobei vorzugsweise die Verriegelungseinheit derart ausgebildet ist, dass ein eingeschobener Verriegelungszapfen 302 automatisch verriegelt wird und einer gesteuert betätigbaren Entriegelungsvorrichtung, optional mit einem Sensor zur Detektion eines angedockten Wagens. Dem Fachmann sind dabei neben obiger bevorzugter Ausführung aber auch funktional gleichwertige Ausführungen eines solchen Andockmechanismus zum positionierenden und vorzugsweise auch verriegelnden Andocken von Wagen in verschiedenen Variationen geläufig, beispielsweise mit Elektro- oder Schaltmagneten.

**Fig. 4c** zeigt eine weitere Detailansicht von Fig. 2a mit der Blickrichtung gemäss dem dort eingezeichneten Pfeil 4D und einigen Elementen ausgeblendet zur besseren Sicht auf die Kupplung 310a. Diese Kupplung 310a ist in der beispielhaft gezeigten Ausführungsform ausgebildet mit einer Kraftübertragung von der Kabelbearbeitungsmaschine 90 zum Mehrfachspeicher 30a, 30b. Diese ist ausgeführt als Gruppe von mehreren Zahnrädern 312a, 312b, 313a, 313b. Der Antrieb 311 ist ausgeführt als Elektromotor mit Getriebe. Er ist befestigt an der Kabelbearbeitungsmaschine 90 und hat das erste Zahnrad 312a an seiner Welle angeflanscht. Das zweite Zahnrad 312b ist drehbar gelagert im Zwischenradhalter 315, welcher sich wiederum um die Hauptachse des Antriebs 311 drehen kann und über ein passives Kraftelement 314 vorgespannt ist. Auf dem Wagen 30a befinden sich - je nach Kabelförderrichtung - auch nochmals ein oder mehrere Zahnräder 12a, 312b, wobei das eine davon mit dem Förderband 320a verbunden ist. Sobald der Wagen 30a an der Kabelbearbeitungsmaschine 90 andockt, tritt das zweite Zahnrad 312b mit dem Zahnrad 313a oder dem Zahnrad 313b in Wirkverbindung. Um das Einrasten jederzeit, also auch bei einer ungünstigen Lage der Zahnräder 312b, 313a, 313b zueinander - d.h. "Zahn auf Zahn" - zu ermöglichen, kann das Zahnrad 312b durch Drehung der Zwischenradhalterung 315 etwas wegfedern und wird durch das passive Kraftelement 314 bald wieder in die Ausgangslage zurückgebracht. Das ganze Getriebe ist hierbei so gestaltet, dass das Antriebsdrehmoment in Vorzugs-FörderRichtung in dieselbe Richtung zeigt wie die Wirkrichtung des passiven Kraftelements 314. Im hier gezeichneten Fall der Eingangsseite 95a fördert die Kabelfördervorrichtung 320a nach rechts, d.h. in die Kabelbearbeitungsmaschine 90 hinein. Die Zahnräder 313a, 312b drehen im Uhrzeigersinn, die Zahnräder 313b, 312a im Gegenuhrzeigersinn. Somit unterstützt das Antriebsdrehmoment das Zahnrad 312b, sich in Richtung des Zahnrads 313b und damit in Richtung Einrastposition zu bewegen.

Auf der Ausgangsseite 95b (nicht gezeichnet) ist die Förderrichtung andersherum, d.h. aus der Kabelbearbeitungsmaschine 90 heraus. Deshalb sollte dort bevorzugt kein Zwischen-Zahnrad 313b auf der Wagenseite verbaut werden, sondern das Zahnrad 312b direkt mit dem Zahnrad 312a in Wirkverbindung treten.

**Fig. 4d** zeigt eine Schnittansicht der Hauptelemente aus Fig. 3c, gemäss der dort mithilfe des Pfeilpaars 4D eingezeichneten Schnittebene. Dort sieht man nochmals, wie die Zahnräder 312a, 312b und der Zwischenradhalter 315 zueinander und zum Antrieb 311 drehbar gelagert sind.

Optional kann - vorzugsweise gekoppelt mit Elementen des Andockmechanismus 300a, 300b, beispielsweise mit der Verriegelungseinrichtung 304 oder dem Sensor 3042 (Fig. 3a, Fig. 3b) - auch ein Feststellen des Zahnrads bzw. der Kabelfördervorrichtung 320a, 320b erfolgen, sodass die Kabelfördervorrichtung 320a, 320b bei abgedocktem Wagen blockiert ist und nicht unabsichtlich bewegt werden kann. Optional kann auch zusätzlich oder alternativ zur Kamera bzw. zum Sensor 322 (Fig. 1b) eine Lagenüberwachung an der Kabelfördervorrichtung 320a, 320b und/oder der Kabelbearbeitungsmaschine 90 vorhanden sein, welche ausgebildet ist eine Position der Kabelfördervorrichtung 320a, 320b und somit der darin befindlichen Kabel 80 zu ermitteln, sodass die Kabel 80 stets korrekt gegriffen werden können, bzw. die Kabel 80 immer in einer bekannten Lage relativ zur Kabelbearbeitungsmaschine 90 bereitgestellt werden, egal wie die Zahnräder kämmen (z.B. bei Zahn auf Zahn oder einer anderen Verschiebung).

**Fig. 5a** und **Fig. 5b** zeigen speziellen Ausführungsformen der Kabeltransporteinheit 30a auf für den Transport von gewickelten Kabeln 80c, ähnlich wie schematisch skizziert in Fig. 1e. Alle Kabelwickel 80c hängen hierbei in jeweils einer Hängetransporteinheit 53, welche in der Führungsschiene 51a geführt sind. Die zu bearbeitenden Kabelenden sind jeweils in einer Kabelklemme 323 geklemmt und in Richtung Kabelwickel 80c über eine Auflage 324 geführt - identisch wie auch bei kürzeren, nicht gewickelten Kabeln 80 wie in Fig. 3a.

**Fig. 5a** zeigt hierbei eine spezielle Bauform der Kabeltransporteinheit 30c, welche die Führungsschiene 51a mit umfasst.

**Fig. 5b** zeigt eine weitere Bauform für die Wägen zum Transport der Kabelwickel 80c. Hierbei ist die Führungsschiene 51a für die Hängetransporteinheiten 53 auf einem eigenen Hänge-Transporter oder Extra-Wagen 30e befestigt, welcher unabhängig vom Haupt-Wagen 30a bewegt werden kann. Dieser Haupt-Wagen 30a ist vorzugsweise identisch ausgeführt wie die bereits für kürzere Kabel 80 verwendeten Wägen 30a, 30b, z.B. wie in Figs. 2 bis Figs. 4 gezeigt. Für die korrekte Positionierung des Extra-Wagens 30e kann ein weiterer Andockmechanismus ähnlich 300a, 300b (nicht gezeichnet) vorgesehen sein - entweder zwischen den beiden Wägen 30a, 30e oder zwischen Extra-Wagen 30a und Kabelbearbeitungsmaschine 90.

Neben der geringen Vielfalt und Komplexität der Wägen ermöglicht die Ausführung mit zwei getrennten Wägen 30a, 30e auch eine Vereinfachung des Betriebsmodus "einzeln Nachladen". Hierbei bleibt der Haupt-Wagen 30a immer angedockt, der Benutzer fährt die Kabelwickel 80c mit dem Extra-Wagen 30e heran und legt die Kabelenden der Kabelwickel 80c einzeln in die Kabelklemmen 323 ein. Auf der Entlade-Seite können ähnliche Wägen zum Einsatz kommen wie auf der Belade-Seite.

Auch dargestellt sind zwei grundsätzlichen Möglichkeiten, wie der Kabelwickel 80c vorzugsweise aufgehängt werden kann. In **Fig. 5a** wird der hintere bzw. der Kabelklemme 323 abgewandte Abgang des Kabelwickels 80c geklemmt und verarbeitet; in **Fig. 5b** der vordere bzw. der Kabelklemme 323 zugewandte Abgang. Bei Verwendung des hinteren Abgangs wie in Fig. 5a kann das Kabel 80 einfacher und mit geringerem Drehmoment gedreht werden zur korrekten Ausrichtung für spätere Bearbeitungen. Dafür ist aber die Länge des nicht fixierten Kabels zwischen Klemme 323 und Kabelwickel 80c länger, was zum Verhaken benachbarter Kabel bzw. Kabelwickel 80c führen kann. Abhängig vom Typ des Kabels und damit dessen Torsions- und Biegesteifigkeit kann der Benutzer frei wählen, welchen Typ der Aufhängung er bevorzugt wählt. Zur Unterstützung der einfachen Kabeldrehung ist zumindest in jeder Hängetransporteinheit 53 ein Drehgelenk 54 (dargestellt in Fig. 1e) vorgesehen.

**Fig. 6** zeigt eine isometrische Ansicht einer Kabelwickelfördervorrichtung bzw. Mehrfach-Transporteinrichtung 52d für mehrere Hängetransporteinheiten 53, hier ausgeführt mit Walking-Beam-Antrieb. Die Mehrfach-Transporteinrichtung 52d umfasst mehrere Mitnehmer 521, angeordnet im Abstand der Hängetransporteinheiten 53 auf der Führungsschiene 51a des Wagens 30c oder Extra-Wagens 30e, z.B. wie in Fig. 5a, Fig. 5b Diese Mitnehmer 521 sind so ausgestaltet, dass sie formschlüssig eine Kraft auf die Hängetransporteinheiten 53 übertragen können. Im Gegensatz zu einem Förderband (ähnlich 320a, 320b) laufen die Mitnehmer 521 des Walking-Beams für den Transport nicht um, sondern bewegen sich hin und her im vorgegebenen Abstand, wobei sie die Hängetransporteinheiten 53 nur in einer Richtung mitnehmen bzw. fördern und in der Gegenrichtung leer zurücklaufen. Beispielhafte Antriebsvarianten sind in den beiden folgenden Figuren gezeigt.

Alternativ oder ergänzend dazu kann auch die Kabelfördervorrichtung 320a, 320b (beispielsweise in Fig. 1c) mit einem derartigen Walking-Beam-Antrieb ausgeführt sein, wobei dann in diesem Fall die Kabel 80 anstelle der Hängetransporteinheiten 53 gefördert werden. Hierzu könnte der gesamte Walking-Beam-Antrieb ähnlich breit bzw. 2x parallel ausgeführt sein, z.B. wie die bisher beschriebenen Varianten mit Förderbändern oder Ketten.

**Fig. 7a** bis **Fig. 7e** zeigen die Funktionsweise einer Mehrfach-Transporteinrichtung 52d mit Walking-Beam-Förderprinzip und rotativem, vorzugsweise elektrischem Antrieb 525e. Hierzu drehen sich zwei Scheiben 523a, 523b synchron, verbunden über eine Kette oder einen Zahnriemen 524. An diesen beiden Scheiben 523a, 523b exzentrisch befestigt ist der Verbindungsbalken 522, an dem die Mitnehmer 521 befestigt sind. Durch das so erzeugte Parallelogramm erzeugt die Rotation der beiden Scheiben 523a, 523b eine kreisende Bewegung des Verbindungbalkens 522 ohne dass sich dieser dreht, ähnlich wie beim Jahrmarkt-Fahrgeschäft "fliegender Teppich". Die Länge der Mitnehmer 521 und der Abstand zwischen Mehrfach-Transporteinrichtung 52d und Führungsschiene 51a ist hierbei so gewählt, dass der Formschluss zwischen den Mitnehmern 521 und den Hängetransporteinheiten 53 in den Bereichen erzeugt bzw. aufgelöst wird, in welchem sich die Bewegungskomponente des Verbindungsbalkens 522 entlang der Förderrichtung umkehrt, sichtbar in den Teilfiguren a, c und d. So werden die Hängetransporteinheiten 53 bei Drehung der Scheiben 523a, 523b im Gegenuhrzeigersinn nach rechts gefördert (Fig. 7c bis Fig. 7e) und beim Rest der Bewegung (Fig. 7a bis Fig. 7c) werden die Mitnehmer 521 wieder zum Ausgangspunkt zurückgebracht, ohne dass dadurch die Hängetransporteinheiten 53 gestört werden.

**Fig. 8a** bis **Fig. 8b** zeigen in einer beispielhaften Ausführungsform die Funktionsweise einer Mehrfach-Transporteinrichtung 52d mit Walking-Beam-Förderprinzip und translatorischem, vorzugsweise pneumatischem Antrieb 525p und gefederten Mitnehmern 521. Auch hier sind die Mitnehmer 521 am Verbindungsbalken 522 befestigt. Dieser wird allerdings nur hin- und her bewegt in Förderrichtung, angetrieben vorzugsweise durch einen Pneumatikzylinder 525p. Um die Hängetransporteinheiten 53 beim Zurückbringen der Mitnehmer an ihren Ausgangspunkt (Fig. 8a bis Fig. 8d) nicht wieder zurück zu fördern, sind die Mitnehmer 521 im Verbindungsbalken 522 drehbar gelagert und gefedert. Sobald sie entgegen der Förderrichtung in Kontakt treten mit den Hängetransporteinheiten 53 (Fig. 8b) klappen sie ein (Fig. 8c) und klappen dann wieder aus, wenn sie vorbeigefahren sind bzw. wenn sich der Verbindungsbalken 522 in der linken Endposition befindet (Fig. 8d). In der Gegenrichtung erlaubt die drehbare Lagerung keine Bewegung, weshalb die Hängetransporteinheiten 53 in Förderrichtung zuverlässig mitgenommen werden (Fig. 8d bis Fig. 8f). Die Federkraft im Drehgelenk zwischen Mitnehmer 521 und Verbindungsbalken 522 ist hierbei so gewählt, dass sowohl ein zuverlässiges zurückklappen sichergestellt ist (Fig. 8c bis Fig. 8d) als auch ein unerwünschtes Fördern in die falsche Richtung verhindert wird. Hierzu muss die Federkraft geringer gewählt werden als die Haftreibungskraft zwischen Hängetransporteinheit 53 und Führungsschiene 51a.

Alternativ zur passiven Federung der Mitnehmer 521 im Verbindungsbalken 522 können diese auch aktiv quer zur Förderrichtung bewegt werden, vorzugsweise mit einem weiteren Pneumatikzylinder bzw. einem Zylinder-Paar, welches vorzugsweise den kompletten Verbindungsbalken 522 quer bewegt. Auch das Erzeugen der Querbewegung über zumindest eine Kulissenführung ist denkbar.

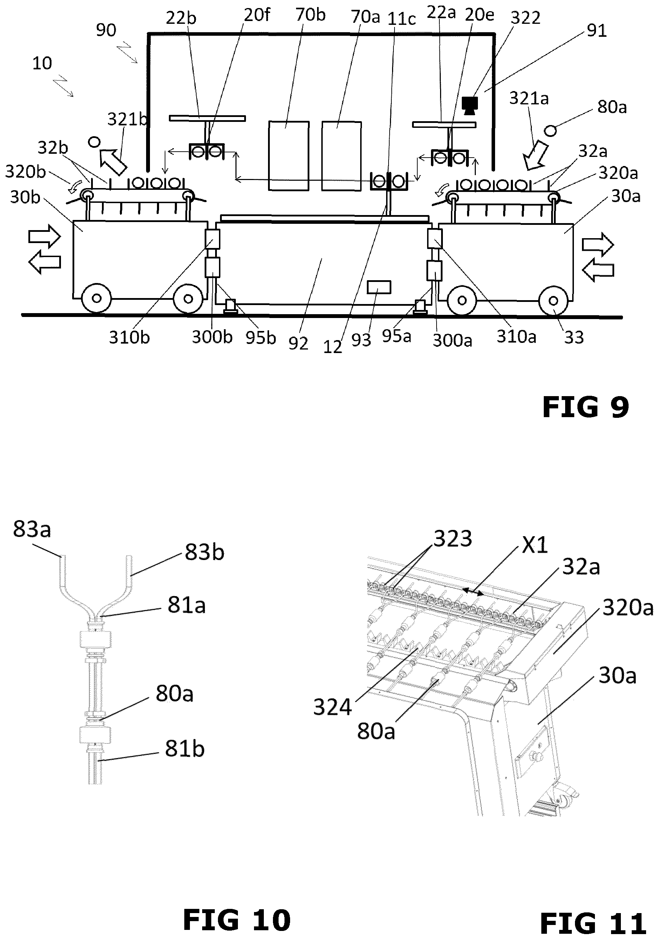

**Fig. 9** zeigt eine schematische Skizze einer weiteren Ausführungsform eines erfindungsgemässen Systems wie zuvor in den **Fig. 1a bis Fig. 1i** gezeigt. Dabei ist dies Ausführungsform strukturell und funktionell mit den zuvor genannten Ausführungsformen vergleichbar und anwendbar.

Dieses Kabeltransportsystem 10 besteht in der Ausführungsform in **Fig. 9** aus zumindest einem (Doppel)Transfergreifer 11c, zwei (Doppel-) Übergabegreifern 20e, 20f, den zu den beiden Greifern gehörenden Transfermechanismen 12, 22a, 22b und zwei Gruppen von Kabeltransporteinheiten 30a, 30b für den Transport mehrerer Kabel 80a. Diese Kabeltransporteinheiten 30a, 30b sind ausgeführt als Wagen bzw. Trolleys, wie zuvor in der **Fig. 1c** beschrieben. Ansonsten ist dieses Kabeltransportsystem strukturell und funktionell unverändert.

Das in **Fig. 10** gezeigte Kabel 80a umfasst an einem Kabelende 81a zumindest zwei Leiter 83a, 83b, welche voneinander beabstandet sind. Dieses Kabel 80a kann, wie zuvor in der **Fig. 3a** beschrieben, in die Kabelhalterung 32a, 32b der Mehrfachspeicher 30a, 30b angeordnet sein, wobei gemäss der **Fig. 11** die beiden Leiter 83a, 83b jeweils in den Kabelklemmen 323 mit einem Abstand X1 voneinander beabstandet eingeklemmt sind und des gegenüberliegende Kabelende 81b in einer Kabelauflage 324 angeordnet ist.

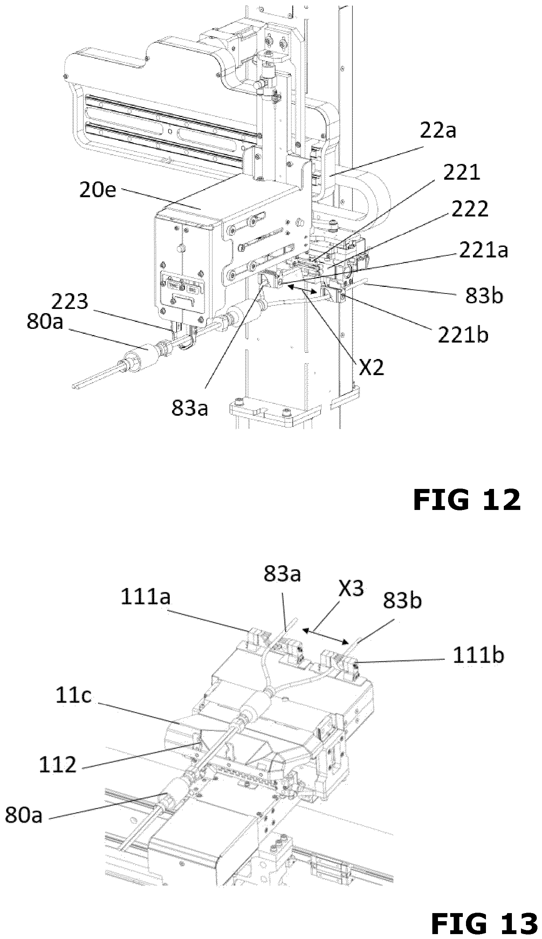

Die **Fig. 12** zeigt den Übergabegreifer 20e, welcher an dem Kabeltransportsystem 10 angeordnet ist. Der Übergabegreifer 20e ist ein Doppelübergabegreifer und ist an einem Transfermechanismus 22a angeordnet, wie zuvor in **Fig. 1a oder Fig. 1b** beschrieben, und wird beispielsweise auch in den Kabeltransportsystemen gemäss **Fig. 1a oder Fig. 1b** eingesetzt. Der Übergabegreifer 20e weist zwei Greiferbackenpaare 221a, 221b zum Greifen der Leiter 83a, 83b auf. Die Greiferbackenpaare 221a, 221b sind an einer Greifertransferführung 221 angeordnet und entlang der Greifertransferführung 221 bewegbar, sodass deren Abstand X2 zueinander einstellbar ist. Dafür ist eine entsprechende Greiferantriebseinrichtung 222 an dem Übergabegreifer 20e angeordnet. Der Übergabegreifer 20e weist an der den Greiferbackenpaare 221a, 221b gegenüberliegenden Seite eine Aufnahmeklemme 223 auf, in der das den Leitern 83a, 83b gegenüberliegende Kabelende 81b des Kabel 80a angeordnet wird. Der Übergabegreifer 20e wird bei der betriebsmässigen Verwendung hin zum Mehrfachspeicher 30a bewegt, wobei der Abstand X2 der Greiferbackenpaare 221a, 221b dem Abstand X1 der Kabelklemmen 323 entspricht und vorteilhaft unverändert bleibt.

Die **Fig. 13** zeigt den Transfergreifer 11c, welche an dem Kabeltransportsystem 10 angeordnet ist. Der Transfergreifer 11c ist ein Doppeltransfergreifer und ist ansonsten strukturell und funktionelle gleich dem Transfergreifer 11a, wie zuvor in **Fig. 1a oder Fig. 1b** beschrieben, und wird beispielsweise auch in den Kabeltransportsystemen gemäss **Fig. 1a oder Fig. 1b** eingesetzt. Der Transfergreifer 11c weist zwei Greiferbackenpaare 111a, 111b zum Greifen der Leiter 83a, 83b auf, welche in einem Abstand X3 voneinander beabstandet sind. Der Transfergreifer 11c weist an der den Greiferbackenpaare 111a, 111b gegenüberliegenden Seite eine Aufnahme 112 auf, in der das den Leitern 83a, 83b gegenüberliegende Kabelende 81b des Kabel 80a angeordnet wird.

Der Übergabegreifer 20e übergibt das entnommene Kabel 80a an den Transfergreifer 11c, welcher dieses für die Bearbeitung zumindest einer, vorzugswiese zumindest zwei oder mehr Kabelbearbeitungs-stationen 70a, 70b zuführt. Dabei ändern die Greiferbackenpaar 221a, 221b vor oder während der Übergabe deren Abstand von X2 auf X3. Hierzu bewegen sich neben den beiden Übergabegreifer 20e und Transfergreifer 11c auch die zu diesen jeweils zugehörigen Transfermechanismen 12 bzw. 22a, wie zuvor in **Fig. 1a** gezeigt.

Wie dem Fachmann klar sein wird, können die in den Figuren dargestellten oder hierin beschriebenen Ausführungsformen und Verfahren im Rahmen der Erfindung auch kombiniert und ausgetauscht werden.

Zum Beispiel, die Erfindung ermöglicht ein Kabelbearbeitungssystem umfassend eine Kabelbearbeitungsmaschine 90 mit einer Maschinensteuerung zur automatischen Bearbeitung von Kabelenden schwerer, biegesteifer, vor-abgelängter Kabel 80, 80a mit einem Rahmen 92, 92a, 92b mit (i) einer Eingangsseite 95a für die Aufnahme der Kabel 80, 80a, (ii) wenigstens zwei rahmengestützten Kabelbearbeitungsstationen 70a, 70b, (iii) einer Kabeltransportvorrichtung 10 zum Transport wenigstens eines Kabels 80, 80a, welche Kabeltransportvorrichtung 10 in der Kabelbearbeitungsmaschine 90 zumindest einen rahmengestützten, verfahrbaren Greifer 11, 11a, 11b, 11c, 20a, 20b, 20c, 20e, 20f für das Kabel 80, 80a aufweist, und (iv) einer Ausgangsseite 95b für die Abgabe eines bearbeiteten Kabels 80, 80a, wobei die Kabeltransportvorrichtung 10 mit einer als Mehrfachspeicher 30a, 30b ausgebildeten Kabelfördervorrichtung 320a, 320b ausgerüstet ist, welche mehrere Kabelhalterungen 32, 32a, 32b aufweist, und wobei zumindest der zumindest eine Greifer 20a, 20d, 20e, 20f als Übergabegreifer, vorzugsweise mithilfe eines rahmengestützten Transfermechanismus 22a, 22d, ausgebildet ist, um eines der Kabel 80, 80a nach dem anderen aus der jeweiligen Kabelhalterung 32, 32a, 32b zu entnehmen und an zumindest eine der Kabelbearbeitungsstationen 70a, 70b und/oder an einen weiteren Greifer 11a, 11b, 11c, 20b, 20c, 20e, 20f zuzuführen, welcher weitere Greifer 11, 11a, 11b, 11c, 20b, 20c, 20e, 20f mit einem weiteren rahmengestützten Transfermechanismus 11, 12a, 12b, 22b, 22c derart bewegbar ausgebildet ist, um eine Übergabe des Kabels 80, 80a in eine der Kabelbearbeitungsstationen 70a, 70b durchzuführen, und der Mehrfachspeicher 30a, 30b als ein autonomer oder geführter Transporter 34 ausgebildet ist.

Als weiteres Beispiel stellt die Erfindung ein Zuführsystem zur Verfügung für schwere, biegesteife Kabel 80, 80a zu einer Kabelbearbeitungsmaschine 90 gemäss dem vorherige Beispiel zur automatischen Bearbeitung von Kabelenden der Kabel 80, 80a in wenigstens einer Kabelbearbeitungsstation 70a, 70b der Kabelbearbeitungsmaschine 90, mit einen Mehrfachspeicher 30a, welcher als ein autonomer oder geführter Transporter 34 ausgebildet ist, welcher mit einem Andockmechanismus 300a zwischen dem Transporter 34 und einer Eingangsseite 95a der Kabelbearbeitungsmaschine 90 an dieser lösbar andockbar ist, wobei der Mehrfachspeicher 30a mehrere Kabelhalterungen 32a aufweist, welche Kabelhalterungen 32a derart ausgebildet sind, dass daraus eines der Kabelenden maschinell von einer Kabeltransportvorrichtung 10 der Kabelbearbeitungsmaschine 90 entnehmbar und zur Bearbeitung der Kabelenden mehreren Kabelbearbeitungsstationen 70a, 70b zuführbar ist, wobei der Transporter 34 derart ausgebildet ist, dass der Mehrfachspeicher 30a während der Kabelbearbeitung so lange er noch Kabel 80, 80a enthält an der Eingangsseite 95a angedockt verbleibt und das Kabel 80, 80a getrennt vom Mehrfachspeicher 30a von und zu den Kabelbearbeitungsstationen 70a, 70b in der Kabelbearbeitungsmaschine 90 bewegbar sind.

Erfindungsgemäss ist das Zuführsystem aber auch unabhängig von der Kabelbearbeitungsmaschine 90 gemäss dem ersten Beispiel anwendbar.

Als noch ein weiteres Beispiel stellt die Erfindung ein Abführsystem zur Verfügung für schwere, relativ biegesteife Kabel 80, 80a aus einer Kabelbearbeitungsmaschine 90 gemäss dem ersten Beispiel zur automatischen Bearbeitung von Kabelenden der Kabel 80, 80a in wenigstens einer Kabelbearbeitungsstation 70a, 70b der Kabelbearbeitungsmaschine 90, mit einen Mehrfachspeicher 30b, welcher als ein autonomer oder geführter Transporter 34 ausgebildet ist, welcher mit einem Andockmechanismus 300a zwischen dem Transporter 34 und einer Ausgangsseite 95b der Kabelbearbeitungsmaschine 90 an dieser lösbar andockbar ist, wobei der Mehrfachspeicher 30b mehrere Kabelhalterungen 32b aufweist, welche Kabelhalterungen 32b derart ausgebildet sind, dass in diesen eines der Kabelenden maschinell von einer Kabeltransportvorrichtung 10 der Kabelbearbeitungsmaschine 90 ablegbar und von einer Bearbeitung der Kabelenden von zumindest einer der Kabelbearbeitungsstationen 70a, 70b abführbar ist, wobei die der Transporter 34 derart ausgebildet ist, dass der Mehrfachspeicher 30b während der Kabelbearbeitung so lange sie noch Platz für zumindest ein Kabel 80, 80a hat an der Ausgangsseite 95b angedockt verbleibt und das Kabel 80, 80a getrennt von dem Mehrfachspeicher der Kabeltransporteinheit 30b von und zu den Kabelbearbeitungsstationen 70a, 70b in der Kabelbearbeitungsmaschine 90 bewegbar sind.

Erfindungsgemäss ist auch das Abführsystem unabhängig von der Kabelbearbeitungsmaschine 90 gemäss dem ersten Beispiel anwendbar.

### Bezugszeichenliste

- 3A-B, 4A-D: Pfeil(paar) zur Blickrichtung/Schnitt-Definition
- 10: Kabeltransportvorrichtung
- 11,11a-b: Transfer-(Greifer)
- 11c: Transfer-(Greifer)
- 111a, 111b: Greiferbackenpaar
- 112: Aufnahme
- 12, 12a-b: Transfermechanismus (mehrere Antriebsachsen)
- 20a-c: Übergabe-(Greifer)
- 20d: Übergabe- und Transfer-Greifer
- 20e, 20f: Übergabe-(Greifer)
- 211a, 211b: Greiferbackenpaar
- 221: Greifertransferführung
- 222: Greiferantriebseinrichtung
- 223: Aufnahmeklemme

- 22a-d: Transfermechanismus (mehrerer Antriebsachsen)
- 30a-b: Mehrfachspeicher (Kabeltransporteinheit, Wagen, Trolley, Mehrfach-Transporter)
- 30c: Mehrfachspeicher mit Führungsschiene für Hängetransporteinheiten
- 30e: Extra-Wagen, (Kabel-)(Mehrfach-)Hängetransporteinheit
- 300a-b: Andockmechanismus
- 301: Führung (Männchen, Profil)
- 302: Verriegelungselement (Verriegelungszapfen)
- 303: Führung (Gegenstück, Weibchen)
- 304: Verriegelungseinrichtung
- 3040: Verriegelungsantrieb (Zylinder)
- 3041: Schiebeplatte
- 3042: Sensor
- 305: Dämpfer
- 310a-b: Kupplung
- 311: Antrieb (für Fördervorrichtung)
- 3111a-b: (Ketten-)Antrieb(srad)
- 3112a-b: Gegenfläche
- 312a-b: Kupplungshälfte (Zahnrad, Antriebs-Seite)
- 313a-b: Kupplungshälfte (Zahnrad, Förderband-Seite)
- 314: Passives Kraftelement (Feder)
- 315: Zwischenradhalter
- 32a-d: Kabelhalterung (Klemme, Auflage, Trennsteg)
- 320a-b: (Kabel-)Fördervorrichtung (Förderband, Walking Beam)
- 3201: Platte (Führungselement)
- 3202a-b: Blech (Führungselement)
- 3203, 3204: Riemen
- 3205a-c: Kette (mit einfach trennbaren Segmenten)
- 3206: Kettensegment
- 321a: Einlegebereich
- 321b: Entnahmebereich
- 322: (Kabel-Füllstands-)Sensor (Kamera)
- 322, 322a-b: (Kettensegment-)Sensor (Kamera)
- 323: (Kabel-)Klemme
- 3231: (Halter-) Aufnahme
- 3232a-b: (Klemmbacken-) Halter
- 3233a-b: Klemmbacke
- 324: (Kabel-)Auflage
- 327: Welle
- 328: Führung
- 329a-b: (Kettenvorrat-) Sammeleinrichtung (Box, Rolle)
- 33: Bewegungselement (Rad)
- 34: Transporter (Wagen)
- 34a-b: Transportwagen
- 341: mechanische Schnittstelle
- 35: Steuerung, (Teil-)Autonomes Fahrsystem
- 351: (Steuerungs-)Kabel
- 352: Antrieb (für Eigenbewegung)
- 353: Sensor (Kamera)
- 354: Energieversorgung (Batterie, Akku)
- 40a-b: Zwischenpufferspeicher (weitere Kabelhalterung)
- 400a: Automatische Beladeeinrichtung
- 400b: Automatische Entladeeinrichtung
- 4020: Übergabe-(Greifer)
- 4022: Transfermechanismus (Roboter)
- 4091: Einhausung (Verschalung)
- 4093: Steuerung
- 4099: Sensor (Kamera)
- 430a-b: Be- oder Entladewagen (Transporter, Wagen, Trolley)
- 432: Kabelhalterung (Klemme, Auflage, Trennsteg)
- 50: Hängetransporteinrichtung (Wickeltransporteinrichtung) (Coil Handling)
- 51a-c: Führung, Führungsschiene, Schiene
- 52a-c: Transporteinrichtung (für 53)
- 52d: Mehrfach-Transporteinrichtung (walking-beam, Fördervorrichtung)
- 521: Mitnehmer
- 522: Verbindungbalken (beam)
- 523a-b: Scheibe
- 524: Zahnriemen
- 525e: (rotativer) Antrieb (elektrisch)
- 525p: (translatorischer) Antrieb (pneumatisch
- 53: Hängetransporteinheit (Schlitten, Transportwagen)
- 531: Schlitten (Transportwagen)
- 54: (drehbare) Lagerung
- 55: Hängebefestigung (Haken)
- 60a: (Magazin-)Beladeeinrichtung
- 60b: (Magazin-)Entladeeinrichtung
- 61a-f: (Belade-/Entlade-)Magazin
- 62a: (betätigbare) Unterseite
- 63a-b: Betätigungseinrichtung
- 64a-b: Magazintransporteinrichtung
- 65: (Fehlteile- / Schlechtteile-)Magazin (Ausschussbox)
- 70a-b: Kabelbearbeitungsstation
- 80: Kabel
- 80a: Kabel
- 80f: (fehlerhaftes) Kabel (Schlechtteil, Fehlteil)
- 80c1, 81c2: Kabelreststück (unvollständige Kabelwickel)
- 81: Kabelende
- 81a, 81b: Kabelende
- 82: Kabelendbereich
- 83a, 83b: Leiter
- 90: Kabelbearbeitungsmaschine
- 91: Einhausung (Verschalung)
- 92, 92a-b: Rahmen (Gestell, Modul)
- 93: Steuerung
- 95a: Eingangsseite
- 95b: Ausgangsseite
- X1: Abstand von 83a zu 83b auf 32a
- X2: Abstand von 83a zu 83b auf 20e
- X3: Abstand von 83a zu 83b auf 11c

## Patentansprüche

1. Kabelbearbeitungssystem umfassend eine Kabelbearbeitungsmaschine (90) mit einer Maschinensteuerung zur automatischen Bearbeitung von Kabelenden schwerer, biegesteifer, vor-abgelängter Kabel (80, 80a) mit einem Rahmen (92, 92a, 92b) mit
- einer Eingangsseite (95a) für die Aufnahme der Kabel (80,80a),
- wenigstens zwei rahmengestützten Kabelbearbeitungsstationen (70a, 70b),
- einer Kabeltransportvorrichtung (10) zum Transport wenigstens eines Kabels (80, 80a), welche Kabeltransportvorrichtung (10) in der Kabelbearbeitungsmaschine (90) zumindest einen rahmengestützten, verfahrbaren Greifer (11c, 20e, 20f) für das Kabel (80a) aufweist, und
- einer Ausgangsseite (95b) für die Abgabe eines bearbeiteten Kabels (80a), wobei die Kabeltransportvorrichtung (10) mit einer als Mehrfachspeicher (30a, 30b) ausgebildeten Kabelfördervorrichtung (320a, 320b) ausgerüstet ist, welche mehrere Kabelhalterungen (32a, 32b) aufweist, und wobei zumindest der zumindest eine Greifer (11c, 20e, 20f) als Übergabegreifer, vorzugsweise mithilfe eines rahmengestützten Transfermechanismus (22a, 22b), ausgebildet ist, um eines der Kabel (80a) nach dem anderen aus der jeweiligen Kabelhalterung (32a, 32b) zu entnehmen und an zumindest eine der Kabelbearbeitungsstationen (70a, 70b) und/oder an einen weiteren Greifer (11c, 20e, 20f) zuzuführen, welcher weitere Greifer (11c, 20e, 20f) mit einem weiteren rahmengestützten Transfermechanismus (12, 22a, 22b) derart bewegbar ausgebildet ist, um eine Übergabe des Kabels (80a) in eine der Kabelbearbeitungsstationen (70a, 70b) durchzuführen, **dadurch gekennzeichnet, dass**
der weitere Greifer (11c, 20e,20f) als ein Doppeltransfergreifer für die Aufnahme von gleichzeitig zwei Leitern (83a, 83b) bzw. Kabelenden (83a, 83b) ausgebildet ist und eine Aufnahme (112) aufweist, in der das den Leitern 83a, 83b gegenüberliegende Kabelende (81b) des Kabels (80a) einlegbar ist und wobei der Doppeltransfergreifer (11c, 20e,20f) zumindest eine rotative oder zumindest eine lineare Bewegungsachse aufweist.

2. Kabelbearbeitungssystem nach Anspruch 1, **dadurch gekennzeichnet, dass** der Mehrfachspeicher (30a, 30b) in angedocktem Zustand einen Entnahmebereich (321b) und/oder einen Einlegebereich (321a) für die Kabel (80a) aufweist, welche Bereiche (321a, 321b) durch eine Einhausung (91) der Kabelbearbeitungsmaschine (90) voneinander und insbesondere von dem zumindest einen Transfergreifer (11c, 20e, 20f) getrennt sind, und vorzugsweise von ausserhalb der Einhausung (91) zugänglich und insbesondere manuell bedienbar sind.

3. Kabelbearbeitungssystem nach einem der vorherigen Ansprüche, **dadurch gekennzeichnet, dass** der Mehrfachspeicher (30a, 30b) in angedocktem Zustand im Wesentlichen vollständig innerhalb einer Einhausung (91) der Kabelbearbeitungsmaschine (90) untergebracht ist.

4. Kabelbearbeitungssystem nach einem der vorherigen Ansprüche, **dadurch gekennzeichnet, dass** die Kabeltransportvorrichtung (10) an der Ausgangsseite (95b) mit einer weiteren als Mehrfachspeicher (30b) ausgebildeten weiteren Kabelfördervorrichtung (320b) ausgebildet ist, welches mehrere weitere Kabelhalterungen (32a, 32b) aufweist, und welches mittels Andockmechanismus (300a, 300b) an der Ausgangsseite (95b) in einer definierten Positionsrelation andockbar ist, wobei der weitere Mehrfachspeicher (30b) als ein autonomer oder geführter Transporter (34) ausgebildet ist, **und dass** ein zweiter verfahrbarer Greifer (20f) ausgebildet ist, eines der Kabel (80a) nach dem anderen aus einer der Kabelbearbeitungsstationen (70a, 70b) zu entnehmen und der jeweiligen weiteren Kabelhalterung (32a, 32b) zuzuführen.

5. Kabelbearbeitungssystem nach einem der vorherigen Ansprüche, **dadurch gekennzeichnet, dass** die Kabelbearbeitungsmaschine (90) und/oder die Kabeltransportvorrichtung (10) mit zumindest einem Sensor (322), vorzugsweise einer Kamera zur Bilderkennung und/oder einer Zähleinrichtung ausgerüstet ist, welcher so ausgebildet ist, eine Information über die Anzahl und/oder Position der Kabel (80, 80a) in einem Mehrfachspeicher (30a, 30b) und/oder in einer Kabelfördervorrichtung (320a, 320b) und/oder in einem Magazin bereitzustellen.

6. Kabelbearbeitungssystem nach einem der vorherigen Ansprüche, **dadurch gekennzeichnet, dass** es so ausgebildet ist, das maschinelle Entnehmen zumindest eines Kabels (80a) oder eines Kabelendes aus dem Mehrfachspeicher (30a) mit einem ersten Übergabegreifer (20e) der Kabelbearbeitungsmaschine (90) zu gestatten, dass ein Übergeben des Kabels (80a) oder Kabelendes vom ersten Übergabegreifer (20e) an einen den Doppeltransfergreifer (11c) erfolgt, das Zuführen des Kabels (80a) oder Kabelendes zu zumindest einer ersten Kabelbearbeitungsstation (70a) durch den Doppeltransfergreifer (11c) erfolgt, und dass das Transferieren des Kabels (80a) oder Kabelendes von der ersten Kabelbearbeitungsstation (70a) in zumindest eine zweite Kabelbearbeitungsstation (70b) durch den Doppeltransfergreifer (11c) erfolgt, dass das Abführen des bearbeiteten Kabels (80, 80a) oder Kabelendes von der zweiten Kabelbearbeitungsstation (70b) durch den Doppeltransfergreifer (11c) erfolgt, und dass das Übergeben des Kabels (80a) oder Kabelendes vom letztgenannten Doppeltransfergreifer (11c) an einen zweiten Übergabegreifer (20f) erfolgt, ohne dabei das Kabel (80a) bzw. die Kabelenden 83a,83b) jemals definitionslos im Raum zu hinterlassen

7. Kabelbearbeitungssystem nach einem der vorherige Ansprüche, **dadurch gekennzeichnet, dass** die Konstruktion und Steuerung ein maschinelles Ablegen des Kabels (80a) oder des Kabelendes in einer Kabelhalterung (32a, 32b) eines zweiten Mehrfachspeichers (30b), welcher als ein autonomer oder geführter Transporter (34) ausgebildet ist, an einer Ausgangsseite (95b) der Kabelbearbeitungsmaschine (90) durch einen Transfer- oder ÜbergabeGreifer (11c, 20e, 20f) erfolgt, vorzugsweise in Kombination mit einem Andocken dieses zweiten Mehrfachspeichers (30b) an der Ausgangsseite (95b) der Kabelbearbeitungsmaschine (90).

8. Kabelbearbeitungssystem nach einem der vorherigen Ansprüche, **dadurch gekennzeichnet, dass** durch die Konstruktion und Steuerung ein automatisches Erkennen von Fehlteilen in der Kabelbearbeitungsmaschine (90) und ein Ablegen dieser Fehlteile (80f) in ein gesondertes Fehlteilemagazin erfolgen kann, insbesondere an der Ausgangsseite (95b) der Kabelbearbeitungsmaschine (90), vorzugsweise mit einem automatischen Markieren der Fehlteile.

9. Kabelbearbeitungssystem nach einem der vorherigen Ansprüche, **dadurch gekennzeichnet, dass** durch die Konstruktion und Steuerung die beiden Leiter (83a, 83b) eines Kabels (80a) im Betrieb jeweils in Kabelklemmen (323) mit einem Abstand (X1) voneinander beabstandet eingeklemmt sind und des gegenüberliegende Kabelende (81b) in einer Kabelauflage (324) angeordnet ist.

10. Kabelbearbeitungssystem nach einem der vorherigen Ansprüche, **dadurch gekennzeichnet, dass** der Übergabegreifer (20e) ein Doppelübergabegreifer ist, der an einem Transfermechanismus (22a) angeordnet ist, **und dass** der Übergabegreifer (20e) zwei Greiferbackenpaare (221a, 221b) zum Greifen der Leiter (83a, 83b) aufweist, wobei die Greiferbackenpaare 221a, 221b an einer Greifertransferführung 221 angeordnet und entlang der Greifertransferführung 221 bewegbar sind, sodass deren Abstand X2 zueinander einstellbar ist.

11. Kabelbearbeitungssystem nach einem der vorherigen Ansprüche, **dadurch gekennzeichnet, dass** der Übergabegreifer (20e) an der den Greiferbackenpaare (221a, 221b) gegenüberliegenden Seite eine Aufnahmeklemme (223) aufweist, in der das den Leitern (83a, 83b) gegenüberliegende Kabelende (81b) des Kabel (80a) angeordnet wird, wobei der Übergabegreifer (20e) bei der betriebsmässigen Verwendung zum Mehrfachspeicher (30a) hin bewegbar ist/hinbewegt wird, wobei der Abstand (X2) der Greiferbackenpaare (221a, 221b) dem Abstand (X1) der Kabelklemmen (323) entspricht und vorteilhaft unverändert bleibt.

12. Kabelbearbeitungssystem nach einem der vorherigen Ansprüche, **dadurch gekennzeichnet, dass** der Transfergreifer (11c) zwei Greiferbackenpaare, (111b) zum Greifen der Leiter (83a, 83b) aufweist, welche in einem Abstand (X3) voneinander beabstandet sind, wobei im Betrieb der Übergabegreifer (20e) das entnommene Kabel (80a) an den Transfergreifer (11c) übergibt, welcher dieses für die Bearbeitung zumindest einer, vorzugswiese zumindest zwei oder mehr Kabelbearbeitungsstationen (70a, 70b) zuführt, wobei die Greiferbackenpaar (221a, 221b) vor oder während der Übergabe deren Abstand von (X2) auf (X3) ändern.

13. Kabelbearbeitungssystem nach einem der vorherigen Ansprüche, **dadurch gekennzeichnet, dass** ein Füllstands-Sensor (322) auf der Eingangsseite (95a) und/oder auf der Ausgangsseite (95b) vorgesehen ist, der/die eine Betriebsart gestatten, bei der ein einziger Bediener oder ein Roboter sowohl das Be- als auch das Entladen übernimmt, und/oder mehreren Maschinen (90) bedient.
